# EUROPÄISCHE PATENTSCHRIFT

(11) **EP 1 692 220 B1**
(45) Veröffentlichungstag und Bekanntmachung des Hinweises auf die Patenterteilung: **31.03.2010**
(21) Anmeldenummer: 04797780.6
(22) Anmeldetag: 10.11.2004
(51) Int. Cl.: C08K 3/22, C08K 5/00, C08K 5/07, C08K 5/3492, C08L 57/08, C08L 27/06

(54) **STABILISATORZUSAMMENSETZUNG FÜR HALOGENHALTIGE THERMOPLASTISCHE HARZZUSAMMENSETZUNGEN**
STABILIZING COMPOSITION FOR THERMOPLASTIC RESIN COMPOSITIONS CONTAINING HALOGEN
COMPOSITION STABILISANTE POUR DES COMPOSITIONS DE RESINE THERMOPLASTIQUES HALOGENEES

(30) Priorität: 12.11.2003 DE 10352762
(43) Veröffentlichungstag der Anmeldung: 23.08.2006
(73) Patentinhaber: Baerlocher GmbH, 85716 Unterschleissheim (DE)
(72) Erfinder: REITH, Walter, 82281 Egenhofen (DE)
(74) Vertreter: Fiesser, Gerold Michael
(86) Internationale Anmeldenummer: PCT/EP2004/012726
(87) Internationale Veröffentlichungsnummer: WO 2005/047380

(56) Entgegenhaltungen:
- WO-A1-93/25613
- WO-A1-02/098964
- DE-A1- 4 134 325
- DE-A1- 19 818 441
- DATABASE WPI Section Ch, Week 199343 Derwent Publications Ltd., London, GB; Class A14, AN 1993-339875 XP002315456 -& JP 05 247300 A (DAINIPPON INK & CHEM KK) 24. September 1993 (1993-09-24)

## Beschreibung

Die vorliegende Erfindung betrifft eine Calcium (Ca) und Zink (Zn) enthaltende Stabilisatorzusammensetzung für thermoplastische Harzzusammensetzungen, insbesondere für Harzzusammensetzungen auf Polyvinylchlorid - (PVC) - Basis.

Halogenhaltige Polymere unterliegen einer Vielzahl von gebrauchs- oder umweltinduzierten chemischen Abbaureaktionen, beispielsweise durch Einwirkung von elektromagnetischer Strahlung oder von Wärme oder von Kombinationen aus zwei oder mehr äußeren Einflüssen, die zu nachhaltigen Beeinträchtigungen der Gebrauchseigenschaften führen können oder bereits zu Problemen während der Verarbeitung führen. Bei dem Abbau halogenierter Polymerer, insbesondere bei PVC, entsteht oft Salzsäure, die aus dem Polymerstrang eliminiert wird, woraus ein verfärbter, ungesättigter Kunststoff mit farbgebenden Polyensequenzen resultiert.

Besonders problematisch wirkt sich dabei aus, dass halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung als auch zu einer Änderung der Materialeigenschaften führt. Darüber hinaus kann die aus nicht stabilisierten, halogenhaltigen Polymeren bei einer derartigen Verarbeitungstemperatur freigesetzte Salzsäure zu einer merklichen Korrosion der Verarbeitungsanlagen führen. Dieser Vorgang spielt insbesondere dann eine Rolle, wenn es bei der Verarbeitung derartiger halogenierter Polymerer zu Formkörper, beispielsweise durch Extrusion, zu Produktionsunterbrechungen kommt und die Polymermasse für eine längere Zeitdauer im Extruder verweilt. Während dieser Zeit kann es in besonderem Maße zu den oben genannten Zersetzungsreaktionen kommen, wodurch die im Extruder befindliche Charge unbrauchbar wird und der Extruder gegebenenfalls geschädigt wird.

Weiterhin neigen Polymere, die einer derartigen Zersetzung unterworfen sind, dazu, Anhaftungen an den Verarbeitungsanlagen zu bilden, die nur schwierig wieder zu entfernen sind und damit den Produktionsprozess hinsichtlich seiner Wirtschaftlichkeit nachteilig beeinflussen sowie gegebenenfalls die Produktqualität nachteilig beeinflussen.

Um die genannten Probleme zu lösen, werden halogenhaltigen Polymeren zur Verarbeitung üblicherweise als sogenannte Stabilisatoren Verbindungen zugesetzt, welche die oben genannten Zersetzungsreaktionen möglichst weitgehend verhindern sollen. In der Regel handelt es sich bei derartigen Stabilisatoren um Feststoffe, welche dem zu verarbeitenden Polymeren vor seiner Verarbeitung zugegeben werden.

Für die Herstellung von Formteilen aus PVC-U, wie Fensterprofilen, technischen Profilen, Rohren und Platten, werden wegen der hohen Anforderungen, die an diese Formteile gestellt werden, und aufgrund ihrer guten stabilisierenden Eigenschaften üblicherweise schwermetallhaltige Stabilisatoren eingesetzt. Da der Einsatz von Schwermetallen wie Blei und Cadmium zur Stabilisierung von PVC aus umweltpolitischen Gründen oft als nachteilig empfunden wird, versucht man diese Stabilisatoren in zunehmendem Maße durch physiologisch unbedenkliche Stabilisierungssysteme auf Basis von Calcium- oder Zinkverbindungen (Ca/Zn - Stabilisatoren) zu ersetzen. Diese Stabilisatoren verleihen den damit stabilisierten Formteilen jedoch meist eine deutlich geringere Thermostabilität.

Die bekannten Ca/Zn - Stabilisierungssysteme sind deshalb vor allem für weiße Formteile aus PVC-U für den Außeneinsatz, wie PVC-Fensterprofile, bezüglich Thermostabilität nur unzureichend.

Aus der DE - A 30 19 632 ist die Verwendung von Hydrotalciten der allgemeinen Formel Mg₁₋ₓAlₓ(OH)₂A_{x/n}ⁿ⁻ * mH₂O zur Inhibierung des Abbaus von thermoplastischen Harzen bekannt. Es hat sich aber gezeigt, dass die hier aufgeführten Verbindungen im Hinblick auf die thermische Stabilität alleine nicht die gewünschte Qualität erreichen.

Auch andere Stabilisatorzusammensetzungen vom Hydrotalcittyp, wie sie z.B. in der EP 0 189 899 B1 als [(M₁²⁺)_{y1}(M₂²⁺)_{y2}]₁₋ₓMₓ³⁺(OH)₂A_{x/n}ⁿ⁻ * m H₂O beschrieben werden, können die oft hohen Anforderungen an die Thermostabilität von PVC enthaltenden Zusammensetzungen nicht oder nur unzureichend befriedigen.

Der Einsatz von Calciumhydroxid als Stabilisator für PVC wird beispielsweise in der DE 29 35 689 A1 beschrieben. Aus der EP 0 394 547 B1 ist die Kombination von überbasischen Erdalkalicarboxylaten mit Zeolith, Calciumhydroxid und Perchloraten bekannt. Die dort beschriebene Kombination ist jedoch nur für den Einsatz in PVC-P für den Innenbereich geeignet. Dies gilt ebenso für die in der DE 40 31 401 A1 genannten Zusammensetzungen.

In der DD 298 799 A wird vorgeschlagen eine Kombination verschiedener, feindisperser mit Calciumstearat gecoateter Calciumverbindungen als PVC-Stabilisatoren einzusetzen.

Die gemäß den oben genannten Druckschriften offenbarten Lösungsansätze zeigen jedoch keine befriedigende Stabilisierung bei hoher Beanspruchungslage.

Die WO 99/55777 beschreibt eine Stabilisatorzusammensetzung für halogenhaltige thermoplastische Harzzusammensetzungen. Gemäß der Druckschrift wird zur Stabilisierung ein Gemisch aus gegebenenfalls oberffächenmodifiziertem Calciumhydroxid und/oder Calciumoxid und einem hydroxylgruppenhaltigen Isocyanurat vorgeschlagen. Während die dort beschriebenen Zusammensetzungen bereits eine deutliche Verbesserung der Stabilität halogenhaltiger Harzzusammensetzungen hinsichtlich des vorstehend zitierten Standes der Technik bewirken, ist das Verhalten der entsprechend stabilisierten Zusammenetzungen in einigen Verarbeitungssituationen jedoch noch nicht völlig befriedigend. Darüber hinaus weisen die Oberflächen der aus einer derartigen Zusammensetzung hergestellten Profile oft Unregelmäßigkeiten auf, die das Erscheinungsbild der Profile nachteilig beeinflussen. Weiterhin läßt die Rheologie der Zusammensetzungen bei der Verarbeitung verschiedentlich zu wünschen übrig. Insbesondere dann, wenn auf einen möglichst geringen Gehalt an Stabilisatorbestandteilen Wert gelegt wird, lassen die Stabilisierungergebnisse in einigen Fällen noch Spielraum für Verbesserungen des Stabilisierungsergebnisses.

Verarbeitungshilfsmittel sind zur gezielten Einstellung der Eigenschaften während und nach der Verarbeitung von halogenhaltigen thermoplastischen Polymeren in der Regel unerläßlich. Neben dem Aspekt der oft nicht unerheblichen Kosten, die für solche Verarbeitungshilfsmittel aufgewandt werden müssen, rückt immer häufiger die Beeinflussung des gesamten Eigenschaftsbilds eines halogenhaltigen thermoplastischen Polymeren durch Stabilisatoren und Verarbeitungshilfsmittel in den Blickpunkt der verarbeitenden Industrie. In zunehmendem Maße werden daher bei der Verarbeitung von halogenhaltigen Polymeren Stabilisatoren verlangt, die auch bei geringen Einsatzmengen gleichzeitig ausgezeichnete Verarbeitungseigenschaften und eine den jeweiligen Bedürfnissen angemessene Stabilität bewirken. Aus dem Stand der Technik sind zwar Stabilisatorsysteme bekannt, die auf einzelnen Gebieten der Stabilisierung oder der rheologischen Beeinflussung gute Ergebnisse erzielen, die gleichzeitige Einstellung guter Stabilisierungs- und Verarbeitungseigenschaften führt jedoch oft zum Einsatz eines Gemischs aus Stabilisatoren und weiteren Verarbeitungshilfsmitteln, dessen Einsatzmenge hinsichtlich des erzielten Ergebnisses zu groß ist.

Der Erfindung liegt daher die Aufgabe zugrunde, eine Stabilisatorzusammensetzung für halogenhaltige thermoplastische Harze zur Verfügung zu stellen, die im Vergleich zu den bekannten Formulierungen eine ausreichende Thermostabilität aufweist. Der Erfindung liegt als weitere Aufgabe zugrunde, eine Stabilisatorzusammensetzung für halogenhaltige thermoplastische Harze zur Verfügung zu stellen, die im Vergleich zu den bekannten Formulierungen eine verbesserte Farbhaltung aufweist. Darüber hinaus liegt der Erfindung die Aufgabe zugrunde, eine Stabilisatorzusammensetzung für halogenhaltige thermoplastische Harze zur Verfügung zu stellen, die im Vergleich zu den bekannten Formulierungen ein verbessertes Verhalten bei der Angelierung zeigt. Der Erfindung liegt weiterhin die Aufgabe zugrunde, eine Stäbilisatorzusammensetzung für halogenhaltige thermoplastische Harze zur Verfügung zu stellen, die besonders für den Einsatz in PVC-U für den Außenbereich geeignet ist. Der Erfindung liegt weiterhin die Aufgabe zugrunde, eine Stabilisatorzusammensetzung für halogenhaltige thermoplastische Harze zur Verfügung zu stellen, die kein "plate-out" (Ablagerungen im Extruder oder im Kaliber) zeigt und auf vielen verschiedenen Maschinen einsetzbar ist. Weiterhin liegt der Erfindung die Aufgabe zugrunde, eine Stabilisatoizusammensetzung für halogenhaltige thermoplastische Harze zur Verfügung zu stellen, die in vielen verschiedenen Formulierungen, d.h. mit unterschiedlichen PVC-Typen, unterschiedlichen Kreidetypen, unterschiedlichen Impact Modifiern sowie bei unterschiedlichen Dosierungen dieser Additive eingesetzt werden kann.

Diese Aufgabe wird erfindungsgemäß gelöst durch eine Stabilisatorzusammensetzung für halogenhaltige thermoplastische Harze, umfassend
(a) Calciumhydroxid und/oder Calciumoxid, die gegebenenfalls oberflächenmodifiziert sein können,
(b) ein hydroxylgruppenhaltiges Isocyanurat und
(c) mindestens ein β-Diketon.

Gegenstand der vorliegenden Erfindung ist daher eine Stabilisatorzusammensetzung zur Stabilisierung halogenhaltiger thermoplastischer Harze, umfassend
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch,
wobei der Gewichtsanteil der Komponente (c) weniger als 0,3 phr, bezogen auf das zu stabilisierende thermoplastische Harz oder die zu stabilisierenden thermoplastischen Harze, beträgt.

Häufig werden bei der Beschreibung von Stabilisatorzusammensetzungen für halogenhaltige Polymere Mengenangaben dahingehend durchgeführt, dass die Menge an Inhaltsstoffen auf die spätere Einsatzmenge in Abmischung mit dem zu stabilisierenden Polymeren angegeben wird. Auf diese Weise wird erreicht, dass die Mengenangabe hinsichtlich der angegebenen Wirkung im Polymeren eine Bezugsgröße aufweist.

Der Geweichtsanteil der verschiedenen Komponenten an einer erfindungsgemäßen Stabilisatorzusammensetzung kann jedoch auch auf das Gesamtgweicht der Stabilsatorzusammensetzung selbst bezogen werden. So wird erreicht, dass eine Bezugsgröße innerhalb der Zusammensetzung selbst entsteht, wobei die gewählte Zusammensetzung sich besonders gut zum erfindungsgemäß beschriebenen Einsatz eignet, da ihre Eigenschaften insgesamt den Einsatz hinsichtlich der Bezugsmenge zum zu stabilisierenden Polymeren unterstützen. Das heißt, dass eine erfindungsgemäße Zusammensetzung, welche die Inhaltsstoffe in den unten angegebenen Mengen enthält, beispielsweise bei einem Einsatz in einer Menge, die den oben angegebenen Bezugsgrößen zum zu stabilisierenden Polymeren entspriocht, aufgrund der Auwahl der Mengen der Inhaltsstoffe für besonders gute Stabilisierungsergebnisse sorgt. Die vorliegende Erfindung betrifft daher auch eine Stabilisatorzusammensetzung zur Stabilisierung halogenhaltiger thermoplastischer Harze, umfassend
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch,
wobei der Gewichtsanteil der Komponente (c) 0,01 bis 1,728 Gew.-%, bezogen auf das Gesamtgewicht der Stabilsatorzusammensetzung, beträgt.

Als Komponente (a) eignen sich Calciumoxid oder Calciumhydroxid oder deren Gemisch in im wesentlichen beliebiger Form. Calciumoxid oder Calciumhydroxid werden dabei vorzugsweise in Pulverform eingesetzt. Geeignete Pulver können eine im Wesentlichen beliebige Größenverteilung der Pulverteilchen aufweisen, solange sich das Stabilisierungsergebnis durch die gewählte Teilchengrößenverteilung nicht oder nicht wesentlich mehr als den Umständen nach tolerierbar, verschlechtert. Entsprechendes gilt für die BET-Oberfläche der eingesetzten Teilchen.

Beispielsweise werden im Rahmen der vorliegenden Erfindung Calciumoxid- oder Calciumhydroxidpartikel eingesetzt, die einen Wert D50 für die Teilchengrößenverteilung von etwa 30 µm oder weniger aufweisen, insbesondere weniger als etwa 10 µm. oder weniger als etwa 5 µm. Die sekundäre Partikelgröße (Agglomeratgröße) sollte einen Wert von etwa 40 µm nicht überschreiten. Vorzugsweise beträgt die sekundäre Partikelgröße weniger als etwa 40 µm, insbesondere weniger als etwa 30 µm oder weniger als etwa 20 µm.

Die Calciumoxid- oder Calciumhydroxidpartikel können gegebenenfalls in dem Fachmann bekannter Weise oberflächenmodifiziert sein. Besonders geeignet sind mit Stearinsäure oder 12-Hydroxystearinsäure oberflächenmodifizierte Partikel.

Es hat sich erfindungsgemäß herausgestellt, dass besonders gute Ergebnisse erzielt werden können, wenn die Stabilisatorzusammensetzung die Komponente (a) in einer Menge von 0,01 bis 2 phr, bezogen auf das zu stabilisierende thermoplastische Harz oder die zu stabilisierenden thermoplastischen Harze, enthält. Besonders geeignete Anteile an Komponente (a) liegen beispielsweise in einem Bereich von 0,05 bis 1,0 phr, oder innerhalb eines Bereichs von 0,08 bis 0,8 phr. Ebenfalls geeignet sind beispielsweise Mengen von 0,1 bis 0,5 phr, beispielsweise 0,15 bis 0,45 phr oder noch in 0,2 bis etwa 0,4 phr oder 0,25 bis 0,35 phr oder 0,28 bis 0,32 phr. Der Gehalt an Komponente (a) beträgt im Rahmen einer bevorzugten Ausführungsform der vorliegenden Erfindung 0,05 bis 0,3299 phr, bezogen auf das zu stabilisierende thermoplastische Harz oder die zu stabilisierenden thermoplastischen Harze.

Die Komponente (b) ist in einer erfindungsgemäßen Stabilisatorzusammensetzung vorzugsweise in einer Menge von 0,01 bis 1 phr, bezogen auf das zu stabilisierende thermoplastische Harz oder die zu stabilisierenden thermoplastischen Harze, enthalten. Besonders geeignete Mengen liegen beispielsweise innerhalb eines Bereichs von 0,03 bis 0,9 phr oder 0,05 bis 0,7 phr oder 0,08 bis 0,5 phr oder 0,1 bis 0,4 phr oder 0,12 bis 0,25 phr oder 0,15 bis 0,2 phr. Der Gehalt an Komponente (b) beträgt vorzugsweise 0,05 bis 0,299 phr, bezogen auf das zu stabilisierende thermoplastische Harz oder die zu stabilisierenden thermoplastischen Harze.

Grundsätzlich eignen sich im Rahmen der vorliegenden Erfindung als Komponente (b) alle Isocyanurate, die mindestens eine OH-Gruppe aufweisen. Im Rahmen einer bevorzugten Ausführungsform der vorliegenden Erfindung werden jedoch Isocyanurate eingesetzt, die mindestens zwei OH-Gruppen enthalten. Besonders bevorzugt ist im Rahmen der vorliegenden Erfindung jedoch der Einsatz von Isocyanuraten, die drei OH-Gruppen aufweisen.

Im Rahmen einer besonders bevorzugten Ausführungsform der vorliegenden Erfindung wird das hydroxylgruppenhaltige Isocyanurat aus Verbindungen der allgemeinen Formel (I) 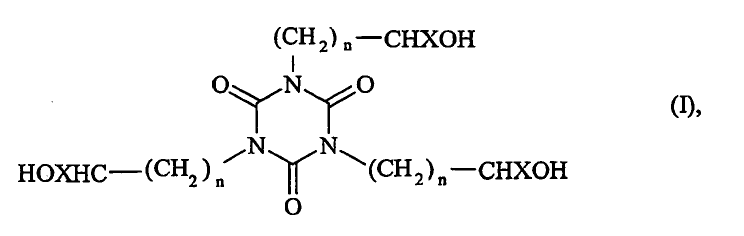 worin die Gruppen X und die Indices n gleich oder verschieden sind und n für eine ganze Zahl von 0 bis 5 und X für ein Wasserstoffatom oder für eine lineare oder verzweigte Alkylgruppe mit 1 bis 6 Kohlenstoffatomen steht, ausgewählt.

Besonders bevorzugt sind dabei Tris(hydroxyethyl)isocyanurat (im folgenden als THEIC bezeichnet) sowie gehinderte phenolische Isocyanurate gemäß der EP 0 685 516 B1, auf deren Offenbarung hinsichtlich entsprechender gehinderter phenolischer Isocyanurate ausdrücklich Bezug genommen wird und deren solche Isocyanurate betreffende Offenbarung als Bestandteil der Offenbarung des vorliegenden Textes verstanden wird.

Neben den Komponenten (a) und (b) enthält eine erfindungsgemäße Zusammensetzung noch mindestens ein β-Diketon oder ein Salz eines β-Diketons oder deren Gemisch. Das heißt, dass eine erfindungsgemäße Zusammensetzung beispielsweise ein β-Diketon oder ein Gemisch aus zwei oder mehr β-Diketonen, oder ein Salz eines β-Diketons oder ein Gemisch aus zwei oder mehrere Salzen eines β-Diketons oder ein Gemisch aus zwei oder mehr Salzen von zwei oder mehr β-Diketonen oder ein Gemisch von einem β-Diketon und einem Salz eines β-Diketons oder ein Gemisch aus zwei oder mehr β-Diketonen und einem Salz eines β-Diketons oder ein Gemisch aus zwei oder mehr β-Diketonen und einem Gemisch aus zwei oder mehr Salzen eines β-Diketons oder ein Gemisch aus zwei oder mehr β-Diketonen und einem Gemisch aus zwei oder mehr Salzen von zwei oder mehr β-Diketonen oder ein Gemisch aus einem β-Diketon und einem Gemisch aus zwei oder mehr Salzen eines β-Diketons oder ein Gemisch aus einem β-Diketon und einem Gemisch aus zwei oder mehr Salzen von zwei oder mehr β-Diketonen enthalten kann.

Als β-Diketone eignen sich beispielsweise Verbindungen der allgemeinen Formel II 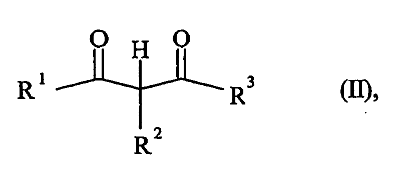 worin R¹ und R³ jeweils unabhängig voneinander für eine gegebenenfalls substituierte lineare oder verzweigte Alkyl- oder Alkenylgruppe mit 1 bis 30 Kohlenstoffatomen, eine gegebenenfalls substituierte Aralkylgruppe mit 7 bis 31 C-Atomen, eine gegebenenfalls substituierte Aryl- oder Heteroarylgruppe mit 3 bis 14 C-Atomen im Ring, eine gegebenenfalls substituierte Cycloalkylgruppe mit 3 bis 18 C-Atomen oder abhängig voneinander jeweils R¹ oder R³ für O-R¹ oder HN-R¹ stehen können und R² für O-R¹ oder COOH oder eine gegebenenfalls substituierte lineare oder verzweigte Alkylgruppe mit 1 bis 24 C-Atomen steht oder jeweils R¹ oder R³ oder R¹ und R³ zusammen mit R² einen gegebenenfalls substituierten cycloaliphatischen oder heterocycloaliphatischen Ring mit unabhängig voneinander jeweils 3 bis 18 C-Atomen bilden, sowie deren Salze.

Als Substituenten eignen sich grundsätzlich alle Substituenten, welche die mit Hilfe der β-Diketonen erreichten Wirkungen hinsichtlich Stabilisierung und Verarbeitungseigenschaften der zu stabilisierenden Polymeren nicht oder nicht mehr als tolerierbar nachteilig beeinflussen. Geeignete Substituenten sind beispielsweise OH-Gruppen, Ketogruppen, Halogenatome wie F, Cl oder Br, Alkylgruppen, Cycloalhylgruppen oder Arylgruppen.

Geeignete Verbindungen, die unter die allgemeine Formel II fallen und im Rahmen der vorliegenden Erfindung einsetzbar sind, sind beispielsweise Diacetylmethan (Acetylaceton), Propionylacetylmethan, Butyroylacetylmethan, Pentanoylacetylmethan, Hexanoylacetylmethan, Heptanoylacetylmethan, Triacetylmethan, Benzoylacetylmethan, Dimedon, Acetyltetralon, Palmitoyltetralon, Stearoyltetralon, Benzoyltetralon, 2-Acetylcyclohexanon, 2-Benzoylcyclohexanon, 2-Acetylcyclohexanon-1,3-dion, Bis(4-methylbenzoyl)methan, Bis(2-hydroxybenzoyl)methan, Tribenzoylmethan, Diacetylbenzoylmethan, Stearoylbenzoylmethan, Palmitoylbenzoylmethan, Diacetylbenzoylmethan, Dibenzoylmethan, 4-Methoxybenzoylbenzoylmethan, Bis(3,4-methylendioxybenzoyl)methan, Benzoylacetyloctylmethan, Benzoylacetylphenylmethan, Stearoyl-4-methoxybenzoylmethan, Bis(4-tert.-butylbenzoyl)methan, Benzoylacetylethylmethan, Benzoyltriflouracetylmethan, Distearoylmethan, Steaioylacetylmethan, Palmitoylacetylmethan, Lauroylacetylmethan, Benzoylformylmethan, Acetylformylmethylmethan, Benzoylacetylphenylmethan, Bis(cyclohexanoyl(2))methan und dergleichen.

Als Salze dieser Verbindungen eignen sich beispielsweise die Salze mit Alkalimetallen, Erdalkalimetallen oder geeigneten Übergangsmetallen. Geeignete Salze sind beispielsweise die Salze der o.g. Verbindungen mit Li, Na, K, Ba, Ca, Mg, Zn, Zr, Ti, Sn oder Al. Unter den Salzen der Verbindungen der allgemeinen Formel II bevorzugt sind insbesondere die Salze mit Ca oder Zn oder deren Gemische.

Besonders bevorzugt sind dabei im Rahmen der vorliegenden Erfindung die Salze von β-Diketonen mit einem Schmelzpunkt von weniger als etwa 150 °C, insbesondere mit einem Schmelzpunkt von weniger als etwa 120 °C, beispielsweise Ca-Acetylacetonat oder Zn-Acetylacetonat.

Es hat sich im Rahmen der vorliegenden Erfindung darüber hinaus als vorteilhaft erwiesen, wenn eine Zusammensetzung gemäß der vorliegenden Erfindung ein Gemisch von zwei oder mehr β-Diketonen, beispielsweise 2, 3 oder 4 β-Diketone, umfasst. Besonders bevorzugt ist dabei im Rahmen der vorliegenden Erfindung, wenn ein derartiges Gemisch mindestens ein β-Diketon enthält, das nicht in Salzform vorliegt und mindestens ein β-Diketon, das in Salzform vorliegt, enthält Besonders bevorzugt sind dabei Kombinationen von Ca-Acetylacetonat oder Zn-Acetylacetonat oder deren Gemisch mit einem β-Diketon, das mindestens eine aromatische Gruppe und eine aliphatische Gruppe mit mindestens 12 C-Atomen enthält, beispielsweise die Kombination von Ca-Acetylacetonat oder Zn-Acetylacetonat mit Benzoylstearoylmethan.

Es hat sich im Rahmen der vorliegenden Erfindung herausgestellt, dass, entgegen der ursprünglich aus dem Stand der Technik ableitbaren Auffassung, die Kombination der Komponenten (a), (b) und (c) auch dann zu guten Stabilisierungsergebnissen führt, wenn der Anteil der Komponente (c) an der Zusammensetzung, bezogen auf das zu stabilisierende Polymere, weniger als 0,3 phr beträgt. Im Rahmen einer bevorzugten Ausführungsform der vorliegenden Erfindung beträgt der Anteil der Komponente (c) 0,01 bis 0,3 phr, bezogen auf das zu stabilisierende thermoplastische Harz oder die zu stabilisierenden thermoplastischen Harze, beispielsweise 0,05 bis 0,29 oder 0,08 bis 0,25 oder 0,1 bis 0,24 phr, jeweils bezogen auf die zur Stabilisierung vorgesehene Menge an halogenhaltigem Polymerem.

Im Rahmen einer weiteren bevorzugten Ausführungsform der vorliegenden Erfindung enthält eine erfindungsgemäße Stabilisatorzusammensetzung Calciumacetylacetonat oder Zinkacetylacetonat oder deren Gemisch in einer Menge von 0,001 bis 0,3 phr, bezogen auf die zu stabilisierenden thermoplastischen Harze. Besonders bevorzugte Mengen für den Gehalt an Ca-Acetylacetonat oder Zn-Acetylacetonat oder deren Gemisch liegen beispielsweise in einem Bereich von 0,01 bis 0,29 oder 0,05 bis 0,28 oder 0,1 bis 0,27 oder 0,12 bis 0,26 oder 0,15 bis 0,24 phr, bezogen auf das zu stabilisierende, halogenhaltige Polymere.

Gemäß einer weiteren Ausführungsform der vorliegenden Erfindung enthält eine erfindungsgemäße Stabilisatorzusammensetzung Calciumacetylacetonat oder Zinkacetylacetonat oder deren Gemisch in einer Menge von 0,01 bis 1,728 Gew.-% bezogen auf das Gesamtgewicht der Stabilisatorzusammensetzung. Besonders bevorzugte Mengen für den Gehalt an Ca-Acetylacetonat oder Zn-Acetylacetonat oder deren Gemisch liegen beispielsweise in einem Bereich von 0,005 bis 1,5 Gew.-% oder 0,01 bis 1,3 oder 0,05 bis 0,8 Gew.-%, bezogen auf das Gesamtgewicht der Stabilisatorzusammensetzung.

In diesem Zusammenhang ist es weiterhin vorteilhaft, wenn das Verhältnis von β-Diketonen zu Salzen von β-Diketonen innerhalb eines Bereich von etwa 1:10 bis etwa 10:1 liegt. Bevorzugte Verhältnisse liegen beispielsweise innerhalb eines Bereichs von 1:5 bis 5:1. oder 1 : 2 bis 2 : 1 oder 1 : 1 bis 2 : 1, wobei ein Verhältnis von 2 : 1 im Rahmen der vorliegenden Erfindung bevorzugt wird.

Der Gehalt der Stabilisatorzusammensetzung an den Komponenten (a), (b) und (c) beträgt, bezogen auf die gesamte Stabilisatorzusammensetzung, 0,5 bis 80 Gew.-%. Vorzugsweise beträgt der Gehalt an den Komponenten (a), (b) und (c) etwa 1 bis 50 Gew.-%, beispielsweise 2 bis 20 Gew.-%.

Dabei liegt der Anteil an Komponente (a) in der Stabilisatorzusammensetzung beispielsweise im Bereich von 0,01 bis 30 Gew.-% oder im Bereich von 0,05 bis 15 Gew.-% oder im Bereich von 0,1 bis 10 Gew-% oder im Bereich von 0,15 bis 5 Gew.-% oder im Bereich von oder 0,2 bis 4 Gew.-% oder im Bereich von 0,25 bis 3 Gew.-% oder im Bereich von 0,5 bis 2,6 Gew.-%, jeweils bezogen auf das Gesamtgewicht der Stabilsatorzusammensetzung.

Der Anteil an Komponente (b) liegt in der Stabilisatorzusammensetzung beispielsweise im Bereich von 0,01 bis 30 Gew.-% oder im Bereich von 0,01 bis 20 % oder im Bereich von 0,01 bis 10 % oder im Bereich von 0,05 bis 11 % oder im Bereich von 0,05 bis 6 Gew.-% oder im Bereich von 0,1 bis 5 Gew-% oder im Bereich von 0,15 bis 4 Gew.-% oder im Bereich von 0,2 bis 3 Gew.-% oder im Bereich von 0,25 bis 2 Gew.-% oder im Bereich von 0,5 bis 1,6 Gew.-%, jeweils bezogen auf das Gesamtgewicht der Stabilsatorzusammensetzung.

Der Anteil an Komponente (c) liegt in der Stabilisatoizusammensetzung beispielsweise im Bereich von etwa 0,01 bis etwa 1,728 Gew.-% oder im Bereich von 0,05 bis 1,728 Gew-% oder im Bereich von etwa 0,1 bis 1,728 Gew.-% oder im Bereich von 0,1 bis 1,4 Gew.-% oder im Bereich von 0,1 bis 1,25 Gew.-%, jeweils bezogen auf das Gesamtgewicht der Stabilsatorzusammensetzung.

Während ein Gehalt einer erfindungsgemäßen Stabilisatotzusammensetzung an den oben genannten Komponenten (a), (b) und (c) innerhalb der oben genannten Grenzen bereits zu überraschend guten Stabilisierungsergebnissen führt, hat es sich weiterhin als vorteilhaft herausgestellt, wenn die erfindungsgemäße Stabilisatorzusammensetzung einen Hydrotalcit oder ein Gemisch aus zwei oder mehr Hydrotalciten enthält.

Grundsätzlich ist dabei im Rahmen der vorliegenden Erfindung jede Art von Hydrotalciten geeignet, die hinsichtlich der Verarbeitungseigenschaften und/oder der Stabilisierung eines halogenhaltigen Polymeren im Rahmen einer erfindungsgemäßen Stabilisatoizusammensetzungen zumindest keinen oder jedenfalls im wesentlichen keinen nachteiligen Einfluss zeigt. Besonders geeignet sind beispielsweise Hydrotalcite wie sie in den Druckschriften WO 96/02465 A1 (insbesondere S. 3 bis 7 und Beispiele), EP 0 189 899 (insbesondere S. 10-15, Tabellen 2 bis 10), DE 38 43 581 (insbesondere S. 4), US 4,883,533 (insbesondere Sp. 2 - 4, Beispiele), EP 0 407 139 A2 (insbesondere S. 2 - 3, Beispiele), DE 40 31 818 A1 (insbesondere S. 2 - 3), DE 41 10 835 A1 (insbesondere Sp. 2 - 5, Beispiele), DE 41 17 034 A1 (insbesondere S. 2 - 6, Beispiele), EP 0 522 810 A2 (insbesondere S. 2 - 3), DE 44 39 934 A1 (insbesondere S. 2 - 3, Beispiele) und US 5,352,723 (insbesondere Sp. 2 - 3, Beispiele) beschrieben werden. Auf die Offenbarung der oben genannten Druckschriften, insbesondere auf die Offenbarung an den genannten Stellen wird dabei ausdrücklich verwiesen, wobei die entsprechende Offenbarung der Druckschriften als Bestandteil der Offenbarung des vorliegenden Texts verstanden wird.

Es hat sich dabei erfindungsgemäß gezeigt, dass insbesondere ein Gehalt an Hydrotalcit innerhalb relativ enger Grenzen, welche innerhalb eines Bereich von 0,05 bis 0,25 phr, bezogen auf die Menge an zu stabilisierendem halogenhaltigen Polymeren, dem erfindungsgemäß niedrigen Gehalt an Komponenten (a), (b) und (c) im Hinblick auf einer besonders gute Verarbeitbarkeit und gute Stabilisierungsergebnisse unterstützt. Im Rahmen einer bevorzugten Ausführungsform der vorliegenden Erfindung enthält daher eine erfindungsgemäße Stabilisatorzusammensetzung einen Hydrotalcit oder ein Gemisch aus zwei oder mehr Hydrotalciten in einer Menge von 0,08 bis 0,18 phr, beispielsweise in einer Menge von 0,1 bis 0,15 phr.

Es hat sich weiterhin als vorteilhaft herausgestellt, wenn eine erfindungsgemäße Stabilisatorzusammensetzung mindestens ein Zn-Salz einer organischen Carbonsäure enthält. Besonders vorteilhaft ist in diesem Zusammenhang jedoch, wenn eine erfindungsgemäße Stabilisatorzusammensetzung ein Gemisch aus mindestens einem Zn-Salz einer organischen Carbonsäure mit 16 C-Atomen oder mehr und mindestens einem Zn-Salz einer organischen Carbonsäure mit weniger als 16 C-Atomen enthält.

Geeignete organischen Carbonsäuren sind beispielsweise Capronsäure, Caprylsäure, Caprinsäure, Laurinsäure, Myristinsäure, Önanthsäure, Octansäure, Neodecansäure, 2-Ethylhexansäure, Pelargonsäure, Decansäure, Undecansäure, Dodecansäure, Tridecansäure, Palmitinsäure, Laurylsäure, Linolsäure, Linolensäure, Erucasäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure oder Behensäure.

Vorteilhafterweise beträgt das Verhältnis von Zn-Salz oder Gemisch aus zwei odermehr Zn-Salzen von Carbonsäuren mit 16 C-Atomen oder mehr zu Zn-Salz oder einem Gemisch aus zwei oder mehr Zn-Salzen von Carbonsäuren mit weniger als 16 C Atomen 1 : 100 bis 100 : 1, insbesondere 1:10 bis 10 : 1.

Im Rahmen einer bevorzugten Ausführungsform der vorliegenden Erfindung enthält eine erfindungsgemäße Stabilisatorzusammensetzung ein Gemisch aus Zinkstearat und mindestens einem weiteren organischen Zinksalz, wobei das mindestens eine weitere organische Zn-Salz vorzugsweise ein Zn-Salz einer organischen Carbonsäure mit weniger als 16 C-Atomen ist. Ein besonders bevorzugtes Gemisch stellt dabei ein Gemisch aus Zn-Stearat und Zn-Caprylat dar.

Vorzugsweise beträgt der Anteil eines Gemischs aus zwei oder mehr der oben genannten Zn-Salzen an der erfindungsgemäßen Stabilisatorzusammensetzung 0,1 bis 5 phr, bezogen auf die Menge an zu stabilisierendem halogenhaltigen Polymeren, beispielsweise 0,2 bis 2 phr oder 0,8 bis 1,2 phr.

Es hat sich weiterhin für die Verarbeitungs- und Stabilisierungseigenschaften der vorliegenden erfindungsgemäßen Stabilisatorzusammensetzung als vorteilhaft herausgestellt, wenn die Stabilisatorzusammensetzungen ein Triglycerid enthält.

Geeignete Triglyceride sind diesem Zusammenhang alle Triglyceride welche die Verarbeitungseigenschaften einer Polymerzusammensetzung, welche eine erfindungsgemäße Stabilisatorzusammensetzung enthält, zumindest nicht nachteilig beeinflussen.

Geeignete Triglyceride sind beispielsweise natürliche oder synthetische Fette. Es hat sich erfindungsgemäß herausgestellt, dass die Verwendung von Triglyceriden zusammen mit den oben genannten Verbindungen in einer erfindungsgemäßen Stabilisatorzusammensetzung zu einer Verbesserung der Oberflächenstruktur bei der Extrusion führt. Weitere vorteilhafte Effekte sind eine gute Hydrolysebeständigkeit, schnelle Gelierung, Bindungsfähigkeit für große Mengen an Füllstoffen, kein plate-out Effekt.

Besonders geeignet sind dabei Glycerinstearate wie gereinigter Rindertalg, gehärteter Rindertalg, gereinigtes bzw. gehärtetes Fischöl oder Glycerin(tri-12-hydroxystearate) wie gehärtetes Rizinusöl oder Gemische aus zwei oder mehr der genannten Verbindungen. Besonders geeignet sind gehärteter Rindertalg bzw. gehärtetes Rizinusöl.

Die erfindungsgemäße Stabilsiatorkombination kann zusätzlich mindestens einen weiteren Zusatzstoff oder ein Gemisch aus zwei oder mehr der genannten Zusatzstoffe enthalten. Die nachfolgend genannten Zusatzstoffe können erfindungsgemäß in einer Menge von insgesamt 2 bis 99,9 Gew.-%, bezogen auf die gesamte Stabilisatorzusammensetzung, enthalten sein. Vorzugsweise enthält eine erfindungsgemäße Stabilisatorzusammensetzung insgesamt 0,1 bis 2 phr an Komponenten (a), (b) und (c).

Als Zusatzstoffe geeignet sind beispielsweise weitere Aminoalkohole. Als Aminoalkohole sind im Rahmen der vorliegende Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorliegenden Erfindung sowohl feste als auch flüssige Aminoalkohole als Bestandteil der erfindungsgemäßen Stabilisatorzusammensetzungen geeignet. Im Rahmen der vorliegenden Erfindung wird der Anteil an flüssigen Aminoalkoholen jedoch beispielsweise so gewählt, dass die gesamte Stabilisatorzusammensetzung im wesentlichen in fester Form vorliegt.

Im Rahmen der vorliegenden Erfindung einsetzbare Aminoalkohole weisen im Rahmen einer bevorzugten Ausführungsform der vorliegenden Erfindung einen Schmelzpunkt von mehr als etwa 30 °C, insbesondere mehr als etwa 50 °C auf. Geeignete Aminoalkohole sind beispielsweise Mono- oder Polyhydroxyverbindungen die auf linearen oder verzweigten, gesättigten oder ungesättigten aliphatischen Mono- oder Polyaminen aufbauen.

Hierzu geeignet sind beispielsweise OH-Gruppen tragende Derivate primärer Mono- oder Polyaminoverbindungen mit 2 bis etwa 40, beispielsweise 6 bis etwa 20 C-Atomen. Beispielsweise sind dies entsprechende OH-Gruppen tragende Derivate von Ethylamin, n-Propylamin, i-Propylamin, sek.-Propylamin, tert.-Butylamin, 1-Aminoisobutan, substituierten Aminen mit zwei bis etwa 20 C-Atomen wie 2-(N,N-Dimethylamino)-1-aminoethan. Geeignete OH:-Gruppen tragende Derivate von Diaminen sind beispielsweise solche, die auf Diaminen mit einem Molekulargewicht von etwa 32 bis etwa 200 g/mol aufbauen, wobei die entsprechenden Diamine mindestens zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan, Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N`,N`-Tetramethylbutandiamin, N,N,N',N'-Tetramethylhexandiamin-1,6, Pentamethyldiethylentriamin, Tetramethyldiaminoethylether, Bis-(dimethylaminopropyl)-hamstoff, N,N'-Dimethylpiperazin, 1,2-Dimethylimidazol oder Di-(4-N,N-dimethylaminocyclohexyl)-methan.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-l-phenylethanol, 2-Phenylglycinol oder 2-Amino-1-phenyl-1,3-propandiol sowie Gemische aus zwei oder mehr solcher Verbindungen in Betracht kommen.

Ebenfalls als Zusatzstoffe im Rahmen der vorliegenden Erfindung geeignet sind Verbindungen mit einem Strukturelement der allgemeinen Formel III 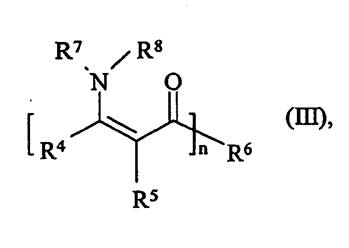 worin n für eine Zahl von 1 bis 100.000, die Reste R⁷, R⁸, R⁴ und R⁵ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R⁴ für einen gegebenenfalls substituierten Acylrest mit 2 bis 44 C-Atomen steht oder die Reste R⁴ und R⁵ zu einem aromatischen oder heterocyclischen System verbunden sind und worin der Rest R⁶ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR⁴ oder CH₂C(O) mit dem in Klammern stehenden Strukturelement verbunden ist, steht oder der Rest R⁶ mit dem Rest R⁴ so verbunden ist, dass insgesamt ein gegebenenfalls substituiertes, gesättigtes oder ungesättigtes heterocyclisches Ringsystem mit 4 bis 24 C-Atomen gebildet wird, oder ein Gemisch aus zwei oder mehr Verbindungen der allgemeinen Formel I, enthalten.

Im Rahmen einer bevorzugten Ausführungsform der vorliegenden Erfindung wird als Verbindung der allgemeinen Formel III eine auf einer α,β-ungesättigten β-Aminocarbonsäure, insbesondere eine auf β-Aminocrotonsäure basierende Verbindung eingesetzt. Besonders geeignet sind hierbei die Ester oder Thioester der entsprechenden Aminocarbonsäuren mit einwertigen oder mehrwertigen Alkoholen oder Mercaptanen wobei X in den genannten Fällen jeweils für O oder S steht.

Wenn der Rest R⁶ zusammen mit X für einen Alkohol- oder Mercaptanrest steht, so kann ein derartiger Rest beispielsweise aus Methanol, Ethanol, Propanol, Isopropanol, Butanol, 2-Ethylhexanol, Isooctanol, Isononanol, Decanol, Laurylalkohol, Myristylalkohol, Palmitylalkohol, Stearylalkohol, Ethylenglykol, Propylenglykol, 1,3-Butandiol, 1,4-Butandiol, 1,6-Hexandiol, 1,10-Decandiol, Diethylenglykol, Thio-Diethanol, Trimethylolpropan, Glyzerin, Tris-(2-hydroxymethyl)-isocyanurat, Triethanolamin, Pentaerythrit, Di-Trimethylolpropan, Diglyzerin, Sorbitol, Mannitol, Xylitol, Di-Pentaerythrit sowie den entsprechenden Mercaptoderivaten der genannten Alkohole gebildet werden.

Eine genaue Beschreibung der im Rahmen der vorliegenden Erfindung einsetzbaren Verbindungen der allgemeinen Formel III findet sich in der WO 02/068526 auf den Seiten 7 bis 10, wobei auf diese Druckschrift sowie die entsprechende Offenbarung ausdrücklich verwiesen wird und die Offenbarung als Bestandteil der Offenbarung des vorliegenden Textes betrachtet wird.

Ebenfalls als Zusatzstoffe geeignet sind Verbindungen mit mindestens einem mercaptofunktioncllen sp²-hybridisierten C-Atom, wie sie in der WO 02/068526 auf den Seiten 10 bis 11 beschrieben werden. Auf diese Druckschrift sowie die entsprechende Offenbarung wird ausdrücklich verwiesen und die Offenbarung wird als Bestandteil der Offenbarung des vorliegenden Textes betrachtet.

Eine erfindungsgemäße Stabilisatorzusammensetzung kann weiterhin Füllstoffe, wie sie im "Handbook of PVC Formulating", E. J. Wickson, John Wiley & Sons, Inc., 1993, auf den Seiten 393-449 beschrieben sind, oder Verstärkungsmittel, wie sie im "Taschenbuch der Kunststoffadditive", R. Gächter/H. Müller, Carl Hanser Verlag, 1990, Seiten 549-615 beschrieben sind, oder Pigmente enthalten.

Ebenfalls als Zusatzstoffe geeignet sind Salze halogenhaltiger Oxysäuren, insbesondere Perchlorat. Beispiele für geeignete Perchlorate sind diejenigen der allgemeinen Formel M(ClO₄)ₙ, wobei M für Li, Na, K, Mg, Ca, Sr, Zn, Al, La oder Ce steht. Der Index n steht entsprechend der Wertigkeit von M für die Zahl 1, 2 oder 3. Die genannten Perchloratsalze können mit Alkoholen (Polyole, Zyklodextrine) oder Etheralkoholen beziehungsweise Esteralkoholen komplexiert sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglykole sowie Di-, Tri- und Tetrapentaerythrit oder Polyvinylalkohol in verschiedenen Polymerisations- und Verseifungsgraden. Als Polyolpartialester sind Glycerinmonoether und Glycerinmonothioether bevorzugt. Ebenfalls geeignet sind Zuckeralkohole oder Thiozucker.

Die Perchloratsalze können dabei in verschiedenen gängigen Darreichungsformen eingesetzt werden, beispielsweise als Salz oder wässrige Lösung, aufgezogen auf ein geeignetes Trägermaterial wie PVC, Calciumsilikat, Zeolithe, Calciumhydroxid, Calciumoxid oder Hydrotalcite oder eingebunden durch chemische Reaktion in einen Hydrotalcit. Hinsichtlich auf Calciumoxid oder Calciumhydroxid aufgezogener Perchloratverbindungen wird ausdrücklich auf die DE 101 24 734 A1 verwiesen, wobei die Offenbarung dieser Druckschrift hinsichtlich geträgerter Perchlorate als Bestandteil der Offenbarung des vorliegenden Textes betrachtet wird.

Ebenfalls als Zusatzstoffe geeignet sind beispielsweise basische Calcium-Aluminium-Hydroxyphosphite der allgemeinen Formel (IV)

CaₓAl₂(OH)_{2(x+3-y)}(HPO₃)_{y}* m H₂O (IV),

worin 2 ≤ x ≤ 12, (2x+5)/2 > y > 0 und 0 ≤ m ≤ 12 gilt. Verbindungen der allgemeinen Formel (IV) werden z. B. in der DE 41 06 411 A beschrieben. Weitere basische Calcium-Aluminium-Hydroxyphosphite werden in DE- A- 3941902 beschrieben. Auf die Offenbarung der genannten Druckschriften hinsichtlich basischer Calcium-Aluminium-Hydroxyphosphite wird ausdrücklich verwiesen. Die Offenbarung wird als Bestandteil der Offenbarung des vorliegenden Textes betrachtet.

Ebenfalls als Zusatzstoffe im Rahmen der erfindungsgemäßen Stabilisatorzusammensetzungen geeignet sind basische Calcium-Aluminium-Hydroxycarboxylaten der allgemeinen Formel V

CaₓAl₂(OH)_{[(2x+6)-y]}A_{y/n}ⁿ⁻ * m H₂O (V),

worin 2 ≤ x ≤ 12, (2x+5)/2 > y > 0, 0 ≤ m ≤ 12 und 1 ≤ n ≤ 8 gilt, und Aⁿ⁻ für ein aliphatisches gesättigtes, ungesättigtes, geradkettiges oder verzweigtes ein- oder mehrfunktionelles Carbonsäureanion mit 1 bis 22 Kohlenstoffatomen oder für ein aromatisches oder heteroaromatisches ein- oder mehrfunktionells Carbonsäureanion mit 6 bis 20 Kohlenstoffatomen steht.

Das Carbonsäureanion Aⁿ⁻ in der allgemeinen Formel (V) kann beispielsweise ausgewählt werden aus Anionen der Malon-, Bernstein-, Adipin-, Fumar-, Malein-, Phthal-, Isophthal-, Terephthal-, Pyridin-, Benzoe-, Salicyl-, Tartron-, Äpfel-, Wein-, Acetondicarbon-, Oxalessig-, Aconit- und Zitronensäure. Bevorzugt sind die Anionen der Fumar- und Phthalsäure, insbesondere werden Fumarate eingesetzt.

Verbindungen der allgemeinen Formel (V) sind z.B. aus DE 41 06 404 A bekannt. Weitere Calcium-Aluminium-Hydroxicarboxylate werden in DE 40 02 988 A beschrieben, wobei auf die Offenbarung dieser Druckschriften hinsichtlich der genannten Calcium-Aluminium-Hydroxycarboxylate ausdrücklich hingewiesen wird und deren Offenbarung als Bestandteil der Offenbarung des vorliegenden Textes gilt.

Weiterhin als Zusatzstoffe im Rahmen der erfindungsgemäßen Stabilisatorzusammensetzung geeignet sind Polyole. Geeignete Polyole sind beispielsweise Pentaerythrit, Di-pentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxymethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Ebenfalls als Zusatzstoffe geeignet sind beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnussöl, epoxidiertes Maisöl, epoxidiertes Baumwollsamenöl sowie Glycidylverbindungen. Als Glycidylverbindungen eignen sich insbesondere die Glycidylverbindungen wie sie in der WO 02/068526 auf den Seiten 20 bis 22 beschrieben werden. Auf die Offenbarung der genannten Druckschrift hinsichtlich der Glycidylverbindungen wird ausdrücklich verwiesen und sie wird als Bestandteil der Offenbarung des vorliegenden Textes betrachtet.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und die als Bestandteil der Offenbarung des vorliegenden Textes betrachtet wird.

Weiterhin als Zusatzstoffe geeignet sind beispielsweise Zeolithe, die durch die allgemeine Formel Mₓⁿ[(AlO₂)ₙₓ(SiO₂)_{y}] * m H₂O beschrieben werden können, worin n für die Ladungszahl des Kations M (z.B. Alkali- oder Erdalkalimetall) steht, 0,8 ≤ x, y ≤ 15 und 0 ≤ m ≤ 300 gilt.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Ebenfalls als Zusatzstoffe geeignet sind Uracile und Aminouracile, wie sie beispielsweise in der EP 1 046 668 genannt werden. Die sich auf Aminouracile beziehende Offenbarung der genannten Druckschrift wird als Bestandteil der Offenbarung des vorliegenden Textes betrachtet.

Weiterhin eignen sich als Zusatzstoffe Aminosäuren und deren Alkali- und Erdalkalisalze.

Ebenfalls als Zusatzstoffe geeignet sind Hydrocalumite der allgemeinen Formel AlCaₓ(OH)2ₓ₊₃ * m H₂O; x = 1 bis 4; m = 0 bis 8, die beispielsweise in der DE 41 03 881 beschrieben werden. Auf die genannte Druckschrift und deren Offenbarung hinsichtlich der genannten Hydrocalumite wird ausdrücklich Bezug genommen und die Offenbarung wird als Bestandteil der Offenbarung des vorliegenden Textes betrachtet.

Eine erfindungsgemäße Stabilisatorzusammensetzung kann darüber hinaus weiterhin als Zusatzstoff eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercaptopropionat), Methylzinn-tris-(isodecyl-thioglycolat), DimethyLzinn-bis-(isooctyl-thioglycolat), Dibutylzinn-bis-(isooctyl-thioglycolat), Monobutylzinn-tris-(isooctyl-thioglycolat), Dioctylzinn-bis-(isooctyl-thioglycolat), Monooctylzinn-tris-(isooctyl-thioglycolat) oder Dimethylzinn-bis-(2-ethylhexyl-β-mercaptopropionat).

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die oben genannte Offenbarung wird ausdrücklich Bezug genommen, wobei die dort genannten Verbindungen und deren Herstellung als Bestandteil der Offenbarung des vorliegenden Textes verstanden werden. Ebenfalls als Additive geeignet sind latente Mercaptane, wie sie in der EP 0 742 259 A1 und der EP 1 201 706 A1 beschrieben werden, sowie Cyanacetylharnstoffe gemäß der DE 299 24 285 U1, wobei auf die oben genannten Offenbarungsstellen ausdrücklich Bezug genommen wird und die dort genannten Verbindungen und deren Herstellung als Bestandteil der Offenbarung des vorliegenden Textes verstanden werden.

Im Rahmen einer weiteren Ausführungsform der vorliegenden Erfindung kann eine erfindungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann weiterhin Gleitmittel wie Montanwachs, Fettsäureester, gereinigte oder hydrierte natürliche oder synthetische Triglyceride oder Partialester, Polyethylenwachse, Amidwachse, Chlorparaffine, Glyzerinester oder Erdalkaliseifen enthalten. Als Zusatzstoffe verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Zusatzstoffe geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet.

Ebenfalls als Zusatzstoffe für Stabilisatorzusammensetzungen gemäß der vorliegenden Erfindung geeignet sind organische Weichmacher.

Als entsprechende Weichmacher geeignet sind beispielsweise die oben im Rahmen der Beschreibung der Lösemittel genannten Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Di-methylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Diisooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyltrimellithat,Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmachern sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Im Rahmen einer weiteren Ausführungsform der vorliegenden Erfindung können die erfindungsgemäßen Stabilisatorzusammensetzungen Antioxidantien, UV-Absorber und Lichtschutzmittel oder Treibmittel enthalten. Geeignete Antioxidantien sind beispielsweise in der EP-A 1 046 668 auf den Seiten 33 bis 35 beschrieben. Geeignete UV-Absorber und Lichtschutzmittel sind dort auf den Seiten 35 und 36 genannt. Auf beide Offenbarungen wird hier ausdrücklich Bezug genommen, wobei die Offenbarungen als Bestandteil des vorliegenden Textes betrachtet werden.

Als Treibmittel eignen sich beispielsweise organische Azo- und Hydrazoverbindungen, Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon.

Eine erfindungsgemäße Stabilisatorzusammensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Eine erfindungsgemäße Stabilisatorzusammensetzung lässt sich grundsätzlich auf beliebige Weise durch Vermischen der einzelnen Komponenten herstellen.

Gegenstand der vorliegenden Erfindung ist daher auch ein Verfahren zur Herstellung einer Stabilisatorzusammensetzung zur Stabilisierung halogenhaltiger thermoplastischer Harze, bei dem
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch,
miteinander vermischt werden, wobei der Gewichtsanteil der Komponente (c) so bemessen wird, dass er weniger als 0,5 phr, bezogen auf das zu stabilisierende thermoplastische Harz oder die zu stabilisierenden thermoplastischen Harze, beträgt.

Da der Geweichtsanteil der verschiedenen Komponenten an einer erfindungsgemäßen Stabilisatorzusammensetzung im Rahmen einer weiteren Ausführungsform der Erfindung auf das Gesamtgweicht der Stabilsatorzusammensetzung selbst bezogen werden kann, betrifft die vorliegende Erfindung auch ein Verfahren zur Herstellung einer Stabilisatorzusammensetzung zur Stabilisierung halogenhaltiger thermoplastischer Harze, bei dem
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch,
miteinander vermischt werden, wobei der Gewichtsanteil der Komponente (c) weniger als 2,369 Gew.-%, bezogen auf das Gesamtgewicht der Stabilsatorzusammensetzung, beträgt.

Die erfindungsgemäßen Stabilisatorzusammensetzungen eignen sich zur Stabilisierung halogenhaltiger Polymerer.

Beispiele für derartige halogenhaltige Polymere sind Polymere des Vinylchlorids, Vinylharze, die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemische aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der oben genannten Polymere enthalten. Im Rahmen einer bevorzugten Ausführungsform der vorliegenden Erfindung werden die erfindungsgemäßen Stabilisatorzusammensetzungen zur Herstellung von Formteilen aus PVC-U wie Fensterprofilen, technischen Profilen, Rohren und Platten eingesetzt.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE, MBAS, PAA (Polyalkylacrylat), PAMA (Polyalkylmethacrylat), EPDM, Polyamiden oder Polylactonen.

Ebenfalls zur Stabilisierung mit den erfindungsgemäßen Stabilisatorzusammensetzungen geeignet sind Gemische von halogenierten und nicht-halogenierten Polymeren, beispielsweise Gemische der oben genannten nicht-halogenierten Polymeren mit PVC, insbesondere Gemische von Polyurethanen und PVC.

Weiterhin können mit den erfindungsgemäßen Stabilisatorzusammensetzungen auch Rezyklate chlorhaltiger Polymere stabilisiert werden, wobei grundsätzlich alle Rezyklate der oben genannten, halogenierten Polymeren hierzu geeignet sind. Geeignet ist im Rahmen der vorliegenden Erfindung beispielsweise PVC-Rezyklat.

Die erfindungsgemäße Stabilisatorzusammensetzung wird bevorzugt für Polyvinylchlorid (PVC) als halogenhaltiges thermoplastisches Harz verwendet. Beispielsweise wird sie für PVC-U (Hart-PVC) eingesetzt.

Der hierin verwendete Begriff Polyvinylchlorid umfaßt dabei gebräuchliche Homo- und Copolymerisate von Vinylchlorid sowie Abmischungen solcher Polyvinylchloridverbindungen mit anderen Polymermassen. Derartige Polymerisate können auf beliebigen Wegen, beispielsweise durch Suspensions-, Emulsions- oder Blockpolymerisation hergestellt worden sein. Ihr K-Wert kann beispielsweise zwischen 50 und 100 liegen.

Es hat sich gezeigt, dass durch Verwendung einer erfindungsgemäßen Stabilsatorkombination insbesondere Formkörper aus PVC-U für Außenanwendungen hergestellt werden können, die eine unerwartet hohe Bewitterungs- und Thermostabilität aufweisen sowie ausgezeichnete Verarbeitungseigenschaften zeigen.

Ein weiterer Gegenstand der vorliegenden Erfindung betrifft daher eine Polymerzusammensetzung, mindestens enthaltend ein halogeniertes Polymeres und eine erfindungsgemäße Stabilisatorzusammensetzung. Für eine Polymerzusammensetzung gemäß der vorliegenden Erfindung gelten daher hinsichtlich der in einer solchen Polymerzusammensetzung enthaltenen Stabilisatorkomponenten die bereits im Hinblick auf die Stabilisatorzusammensetzung gemachten Ausführungen. Die Polymerzusammensetzungen gemäß der vorliegenden Erfindung unterscheiden sich von den erfindungsgemäßen Stabilisatorzusammensetzungen letztendlich dadurch, dass die Stabilisatorzusammensetzungen kein Polymeres enthalten. Ansonsten sind die Eigenschaften der in der Polymerzusammensetzung enthaltenen Stabilisatorzusammensetzungen und der erfindungsgemäßen Stabilisatorzusammensetzungen identisch, so dass die oben genannten Ausführungen hinsichtlich der Stabilisatorzusammensetzungen auch auf die in den Polymerzusammensetzungen enthaltenen Stabilisatorkomponenten gelten.

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von etwa 0,1 bis 20 phr, insbesondere etwa 0,5 bis etwa 15 phr oder etwa 1 bis etwa 12 phr oder etwa 1,5 bis 5 phr. Die für den Einzelfall optimale Menge hängt dabei auch von den verwendeten Gleitmitteln ab. Die Einheit phr steht für "per hundred resin" und betrifft damit Gewichtsteile pro 100 Gewichtsteile Polymeres. Geeignete Einsatzmengen liegen beispielsweise innerhalb eines Bereichs von etwa 2 - 3 phr bzw. 3 - 4 phr, wenn ein Anteil an Verarbeitungshilfsmitteln hinzugerechnet wird.

Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt.

Die Vermischung von Polymeren oder Polymeren und der erfindungsgemäßen Stabilisatorzusammensetzung zur Herstellung der erfindungsgemäßen Polymerzusammensetzungen kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder zuzusetzen.

Gegenstand der vorliegenden Erfindung ist daher auch ein Verfahren zur Herstellung einer Polymerzusammensetzung, enthaltend eine Stabilisatorzusammensetzung und mindestens ein Polymeres, bei dem mindestens
(a) Calciumhydroxid oder Calciumoxid oder deren Gemisch,
(b) mindestens ein hydroxylgruppenhaltiges Isocyanurat,
(c) mindestens ein β-Diketon oder ein Salz eines β-Diketons oder deren Gemisch, und
(d) ein halogenhaltiges thermoplastisches Harz oder ein Gemisch aus zwei oder mehr halogenhaltigen thermoplastischen Harzen
vermischt werden, wobei der Gewichtsanteil der Komponente (c) weniger als 0,5 phr, bezogen auf das zu stabilisierende thermoplastische Harz oder die zu stabilisierenden thermoplastischen Harze, beträgt.

Die erfindungsgemäße Stabilisatorzusammensetzung kann in beliebiger physikalischer Form, z. B. als Pulvermischung, Press-, Sprüh- oder Microgranulat, Schuppe oder Pastille vorliegen. Diese Produktformen können entweder aus Pulvermischungen durch Druck und/oder Temperatur und/oder durch Zugabe von Granulierhilfsmitteln in Granulatform gebracht werden oder durch Abkühlen bzw. Absprühen von Schmelzen der erfindungsgemäßen Zusammensetzung zu Schuppen, Pastillen oder Prills geformt werden. Zur Herstellung von halogenhaltigen Harzmassen können die Einzelsubstanzen direkt oder als Mischung in den o.g. Produktformen vor oder während der Verarbeitung zugegeben werden. Die halogenhaltige thermoplastische Harzmasse kann dann in an sich bekannter Weise zu Formkörpern geformt werden.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzung zur Herstellung von hart- oder weich-PVC.

Eine erfindungsgemäße Polymerzusammensetzung kann zu Formkörpern verarbeitet werden. Gegenstand der vorliegenden Erfindung sind daher auch Formkörper, mindestens enthaltend eine erfindungsgemäße Stabilisatorzusammensetzung oder eine erfindungsgemäße Polymerzusammensetzung.

Der Begriff "Formkörper" umfasst im Rahmen der vorliegenden Erfindung grundsätzlich alle dreidimensionalen Gebilde, die aus einer erfindungsgemäße Polymerzusammensetzung herstellbar sind. Der Begriff "Formkörper" umfasst im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Kabelummantelungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten, Coextrudate mit recyceltem Kern oder Gehäuse für elektrische Apparaturen oder Maschinen, beispielsweise Computer oder Haushaltsgeräte. Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Gegenstand der vorliegenden Erfindung ist auch die Verwendung einer erfindungsgemäßen Stabilisatorzusammensetzung oder einer erfindungsgemäß hergestellten Stabilisatorzusammensetzung oder einer erfindungsgemäßen Polymerzusammensetzung bei der Herstellung von polymeren Formkörpern oder Oberflächenbeschichtungsmitteln.

Insbesondere ist Gegenstand der Erfindung die Verwendung einer Stabilisatorzusammensetzung zur Stabilisierung eines halogenhaltigen thermoplastischen Harzes oder eines Gemischs aus zwei oder mehr halogenhaltigen thermoplastischen Harzen, wobei die Stabilisatorzusammensetzung mindestens
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch
enthält, wobei der Gewichtsanteil der Komponente (c) weniger als 0,5 phr, bezogen auf das zu stabilisierende thermoplastische Harz oder die zu stabilisierenden thermoplastischen Harze, beträgt.

Da der Geweichtsanteil der verschiedenen Komponenten an einer erfindungsgemäßen Stabilisatorzusammensetzung auch auf das Gesamtgweicht der Stabilsatorzusammensetzung selbst bezogen werden kann, betrifft die vorliegende Erfindung auch die Verwendung einer Stabilisatorzusammensetzung zur Stabilisierung eines halogenhaltigen thermoplastischen Harzes oder eines Gemischs aus zwei oder mehr halogenhaltigen thermoplastischen Harzen, wobei die Stabilisatorzusammensetzung mindestens
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch
enthält, wobei der Gewichtsanteil der Komponente (c) weniger als 2,369 Gew.-%, bezogen auf das Gesamtgewicht der Stabilsatorzusammensetzung, beträgt.

Die Erfindung wird anschließend durch Beispiele näher erläutert.

### Beispiele:

Die nachfolgenden Beispiele, die in den Rezepturtabellen A und B beschrieben sind, erläutern die Erfindung. In den Beispielen wurde die Thermostabilität bewertet, indem der DHC-Wert nach DIN 53381, Teil 1 Verfahren B, bestimmt wurde.

### Verarbeitung

Die Rezepturbestandteile wurden zusammen mit dem PVC und anderen Zuschlagstoffen in einem Heiz/Kühl-Mischer bis zu einer Aufbereitungstemperatur von 120°C gemischt und anschließend auf 40°C abgekühlt. Das so hergestellte Dryblend wurde dann mittels eines Extruders zu Profilen extrudiert.

### Beispiele A1 bis A6, Variation des Anteils an β-Diketonen

| | A1 | A2 | A3 | A4 | A5 | A6 |
|---|---|---|---|---|---|---|
| S-PVC | 100 | 100 | 100 | 100 | 100 | 100 |
| Kreide | 5 | 5 | 5 | 5 | 5 | 5 |
| Schlagzähmacher | 7 | 7 | 7 | 7 | 7 | 7 |
| TiO₂ | 4 | 4 | 4 | 4 | 4 | 4 |
| Fließhilfe 41 | 1 | 1 | 1 | 1 | 1 | 1 |
| Distearylphthalat | 0,6 | 0,6 | 0,6 | 0,6 | 0,6 | 0,6 |
| Paraffinwachs | 0,2 | 0,2 | 0,2 | 0,2 | 0,2 | 0,2 |
| Benzoylstearoylmethan | 0,2 | 0,2 | 0,2 | 0,15 | 0,1 | 0,09 |
| Cacliumacetylacetonat | 0,3 | 0,25 | 0,2 | 0,2 | 0,2 | 0,2 |
| Zinkstearat | 0,5 | 0,5 | 0,5 | 0,5 | 0,5 | 0,5 |
| Zinkcaprylat | 0,3 | 0,3 | 0,3 | 0,3 | 0,3 | 0,3 |
| Hydrotalcit | 0,5 | 0,5 | 0,5 | 0,5 | 0,5 | 0,5 |
| | | | | | | |
| Calciumhydroxid | 0,5 | 0,5 | 0,5 | 0,5 | 0,5 | 0,5 |
| THEIC | 0,3 | 0,3 | 0,3 | 0,3 | 0,3 | 0,3 |
| | | | | | | |
| DHC-Wert | 66 | 61 | 52 | 50 | 48 | 48 |
| Oberfläche | - | O | O | O | O | O |
| Angelierung | - | O | O | O | + | + |

Beispiel A1 entspricht Beispiel A4 aus der PCT/EP99/02548

Die Beispiele A1 bis A5 sind Vergleichsbeispiele.

Die Beurteilung der Oberfläche der Profile und die Beurteilung der Angelierung wurden mittels einer Skala mit den Bewertungsmöglichkeiten - -, -, O, + und + + durchgeführt, wobei - - für eine inakzeptable, - für eine schlechte, O für eine durchschnittliche, + für eine überdurchschnittliche und ++ für eine exzellente Bewertung steht.

Beispiele A7 bis A12, Variation des Anteils an β-Diketonen

| | A7 | A8 | A9 | A10 | A11 | A12 |
|---|---|---|---|---|---|---|
| S-PVC | 100 | 100 | 100 | 100 | 100 | 100 |
| Kreide | 5 | 5 | 5 | 5 | 5 | 5 |
| Schlagzähmacher | 7 | 7 | 7 | 7 | 7 | 7 |
| TiO₂ | 4 | 4 | 4 | 4 | 4 | 4 |
| Fließhilfe 41 | 1 | 1 | 1 | 1 | 1 | 1 |
| Distearylphthalat | 0,6 | 0,6 | 0,6 | 0,6 | 0,6 | 0,6 |
| Paraffinwachs | 0,2 | 0,2 | 0,2 | 0,2 | 0,2 | 0,2 |
| Benzoylstearoylinethan | 0,1 | 0,1 | 0,09 | 0,05 | 0,025 | 0,01 |
| Cacliumacetylacetonat | 0,15 | 0,1 | 0,05 | 0,05 | 0,025 | 0,01 |
| Zinkstearat | 0,5 | 0,5 | 0,5 | 0,5 | 0,5 | 0,5 |
| Zinkcaprylat | 0,3 | 0,3 | 0,3 | 0,3 | 0,3 | 0,3 |
| Hydrotalcit | 0,5 | 0,5 | 0,5 | 0,5 | 0,5 | 0,5 |
| | | | | | | |
| Calciumhydroxid | 0,5 | 0,5 | 0,5 | 0,5 | 0,5 | 0,5 |
| THEIC | 0,3 | 0,3 | 0,3 | 0,3 | 0,3 | 0,3 |
| | | | | | | |
| DHC-Wert | 46 | 44 | 43 | 37 | 30 | 17 |
| Oberfläche | + | + | ++ | ++ | + | + |
| Angelierung | + | ++ | + | ++ | ++ | + |

### Beispiele A13 bis A 18, Variation des Anteils an Ca-Hydroxid und THEIC

| | A13 | A14 | A15 | A16 | A17 | A18 |
|---|---|---|---|---|---|---|
| S-PVC | 100 | 100 | 100 | 100 | 100 | 100 |
| Kreide | 5 | 5 | 5 | 5 | 5 | 5 |
| Schlagzähmacher | 7 | 7 | 7 | 7 | 7 | 7 |
| TiO₂ | 4 | 4 | 4 | 4 | 4 | 4 |
| Fließhilfe 41 | 1 | 1 | 1 | 1 | 1 | 1 |
| Distearylphthalat | 0,6 | 0,6 | 0,6 | 0,6 | 0,6 | 0,6 |
| Paraffinwachs | 0,2 | 0,2 | 0,2 | 0,2 | 0,2 | 0,2 |
| Benzoylstearoylmethan | 0,1 | 0,1 | 0,1 | 0,1 | 0,1 | 0,1 |
| Cacliumacetylacetonat | 0,15 | 0,15 | 0,15 | 0,15 | 0,15 | 0,15 |
| Zinkstearat | 0,5 | 0,5 | 0,5 | 0,5 | 0,5 | 0,5 |
| Zinkcaprylat | 0,3 | 0,3 | 0,3 | 0,3 | 0,3 | 0,3 |
| Hydrotalcit | 0,5 | 0,5 | 0,5 | 0,5 | 0,5 | 0,5 |
| | | | | | | |
| Calciumhydroxid | 0,1 | 0,3 | 0,3 | 0,3 | 0,2 | 0,2 |
| THEIC | 0,1 | 0,1 | 0,2 | 0,3 | 0,3 | 0,2 |
| | | | | | | |
| DHC-Wert | 20 | 38 | 41 | 44 | 42 | 41 |

## Patentansprüche

1. Stabilisatorzusammensetzung zur Stabilisierung halogenhaltiger thermoplastischer Harze, umfassend
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch,
wobei der Gewichtsanteil der Komponente (b) in einer Menge von 0,01 bis 30 Gew.-%, bezogen auf das Gesamtgewicht der Stabilsatorzusammensetzung, enthalten ist und wobei der Gewichtsanteil der Komponente (c) weniger als 0,3 phr, bezogen auf das zu stabilisierende thermoplastische Harz oder die zu stabilisierenden thermoplastischen Harze, beträgt.

2. Stabilisatorzusammensetzung nach Anspruch 1, worin die Komponente (a) in einer Menge von 0,01 bis 2 phr, bezogen auf das zu stabilisierende thermoplastische Harz oder die zu stabilisierenden thermoplastischen Harze, enthalten ist.

3. Stabilisatorzusammensetzung nach Anspruch 1 oder 2, worin die Komponente (b) in einer Menge von 0,01 bis 1 phr, bezogen auf das zu stabilisierende thermoplastische Harz oder die zu stabilisierenden thermoplastischen Harze, enthalten ist.

4. Stabilisatorzusammensetzung nach einem der Ansprüche 1 bis 3, **dadurch gekennzeichnet, dass** eine oder mehrere der folgenden Bedingungen verfüllt sind:
(i) der Gehalt an Komponente (a) beträgt 0,05 bis 0,3299 phr, bezogen auf das zu stabilisierende thermoplastische Harz oder die zu stabilisierenden thermoplastischen Harze,
(ii) der Gehalt an Komponente (b) beträgt 0,05 bis 0,299 phr, bezogen auf das zu stabilisierende thermoplastische Harz oder die zu stabilisierenden thermoplastischen Harze,
(iii) der Gehalt an Komponente (c) beträgt 0,01 bis weniger als 0,3 phr, bezogen auf das zu stabilisierende thermoplastische Harz oder die zu stabilisierenden thermoplastischen Harze.

5. Stabilisatorzusammensetzung nach einem der Ansprüche 1 bis 4, **dadurch gekennzeichnet, dass** die Stabilisatorzusammensetzung Calciumacetylacetonat oder Zinkacetylacetonat oder deren Gemisch in einer Menge von 0,001 bis weniger als 0,3 phr, bezogen auf die zu stabilisierenden thermoplastischen Harze, enthält.

6. Stabilisatorzusammensetzung zur Stabilisierung halogenhaltiger thermoplastischer Harze, umfassend
(a) Calciumhydroxid.oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch,
wobei der Gewichtsanteil der Komponente (b) in einer Menge von 0,01 bis 30 Gew.-%, bezogen auf das Gesamtgewicht der Stabilsatorzusammensetzung, enthalten ist und wobei der Gewichtsanteil der Komponente (c) im Bereich von 0,01 bis 1,728 Gew.-%, bezogen auf das Gesamtgewicht der Stabilsatorzusammensetzung, liegt.

7. Stabilisatorzusammensetzung nach Anspruch 6, worin die Komponente (a) in einer Menge von 0,01 bis 30 Gew.-%, bezogen auf das Gesamtgewicht der Stabilsatorzusammensetzung, enthalten ist.

8. Stabilisatorzusammensetzung nach einem der Ansprüche 6 bis 7, **dadurch gekennzeichnet, dass** eine oder mehrere der folgenden Bedingungen erfüllt sind:
(i) der Gehalt an Komponente (a) beträgt 0,15 bis 5 Gew.-%, bezogen auf das Gesamtgewicht der Stabilsatorzusammensetzung,
(ii) der Gehalt an Komponente (b) beträgt 0,1 bis 5 Gew.-%, bezogen auf das Gesamtgewicht der Stabilsatorzusammensetzung,
(iii) der Gehalt an Komponente (c) beträgt 0,05 bis 1,728 Gew.-%, bezogen auf das Gesamtgewicht der Stabilsatorzusammensetzung.

9. Stabilisatorzusammensetzung nach einem der Ansprüche 6 bis 8, **dadurch gekennzeichnet, dass** die Stabilisatorzusammensetzung Calciumacetylacetonat oder Zinkacetylacetonat oder deren Gemisch in einer Menge von 0,01 bis 1,728 Gew.-%, bezogen auf das Gesamtgewicht der Stabilsatorzusammensetzung, enthält.

10. Stabilisatorzusammensetzung nach einem der Ansprüche 1 bis 9, worin das hydroxylgruppenhaltige Isocyanurat gewählt wird aus Verbindungen der allgemeinen Formel (I) 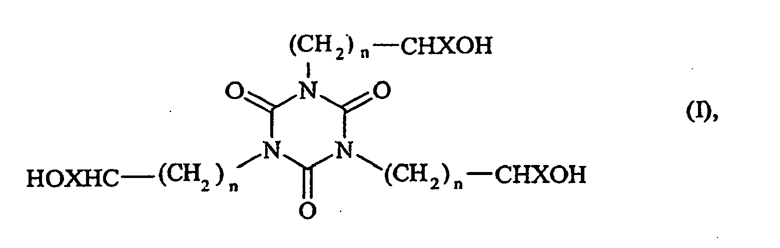 worin die Gruppen X und die Indices n gleich oder verschieden sind und n für eine ganze Zahl von 0 bis 5 und X für ein Wasserstoffatom oder für eine lineare oder verzweigte Alkylgruppe mit 1 bis 6 Kohlenstoffatomen steht.

11. Stabilisatorzusammensetzung nach einem der Ansprüche 1 bis 10, **dadurch gekennzeichnet, dass** die Stabilisatorzusammensetzung einen Hydrotalcit oder ein Gemisch aus zwei oder mehr Hydrotalciten enthält.

12. Stabilisatorzusammensetzung nach einem der Ansprüche 1 bis 11, **dadurch gekennzeichnet, dass** die Stabilisatorzusammensetzung ein Gemisch aus Zinkstearat und mindestens einem weiteren organischen Zinkcarboxylat enthält.

13. Stabilisatorzusammensetzung nach einem der Ansprüche 1 bis 12, **dadurch gekennzeichnet, dass** die Stabilisatorzusammensetzung ein Triglycerid enthält.

14. Polymerzusammensetzung, enthaltend eine Stabilisatorzusammensetzung und mindestens ein Polymeres, wobei als Stabilisatorzusammensetzung mindestens
(a) Calciumhydroxid oder Calciumoxid oder deren Gemisch,
(b) mindestens ein hydroxylgruppenhaltiges Isocyanurat,
(c) mindestens ein β-Diketon oder ein Salz eines β-Diketons oder deren Gemisch,
und als Polymeres
(d) ein halogenhaltiges thermoplastisches Harz oder ein Gemisch aus zwei oder mehr halogenhaltigen thermoplastischen Harzen
enthalten ist und wobei der Gewichtsanteil der Komponente (b) in einer Menge von 0,01 bis 30 Gew.-%, bezogen auf das Gesamtgewicht der Stabilsatorzusammensetzung, enthalten ist und wobei der Gewichtsanteil der Komponente (c) weniger als 0,3 phr, bezogen auf das zu stabilisierende thermoplastische Harz oder die zu stabilisierenden thermoplastischen Harze, beträgt.

15. Polymerzusammensetzung nach Anspruch 14, **dadurch gekennzeichnet, dass** die Komponente (a) in einer Menge von 0,01 bis 2 phr, bezogen auf das halogenhaltige Harz, enthalten ist.

16. Polymerzusammensetzung nach einem der Ansprüche 14 oder 15, **dadurch gekennzeichnet, dass** die Komponente (b) in einer Menge von 0,01 bis 1 Gewichtsteilen, bezogen auf das halogenhaltige Harz, enthalten ist

17. Polymerzusammensetzung nach einem der Ansprüche 14 bis 16, **dadurch gekennzeichnet, dass** das hydroxylgruppenhaltige Isocyanurat gewählt wird aus Verbindungen der allgemeinen Formel (I) 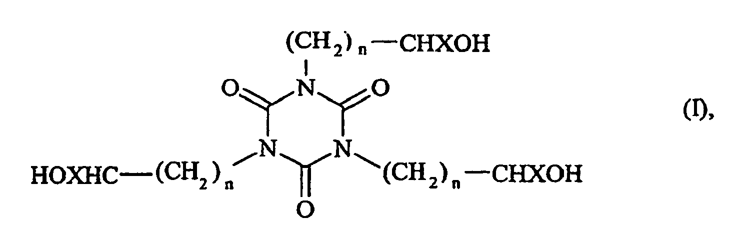 worin die Gruppen X und die Indices n gleich oder verschieden sind und n für eine ganze Zahl von 0 bis 5 und X für ein Wasserstoffatom oder für eine lineare oder verzweigte Alkylgruppe mit 1 bis 6 Kohlenstoffatomen steht.

18. Polymerzusammensetzung nach einem der Ansprüche 14 bis 17, **dadurch gekennzeichnet, dass** eine oder mehrere der folgenden Bedingungen erfüllt sind:
(i) der Gehalt an Komponente (a) beträgt 0,05 bis 0,3299 phr, bezogen auf die zu stabilisierenden thermoplastischen Harze,
(ii) der Gehalt an Komponente (b) beträgt 0,05 bis 0,299 phr, bezogen auf die zu stabilisierenden thermoplastischen Harze,
(iii) der Gehalt an Komponente (c) beträgt 0,01 bis weniger als 0,3 phr, bezogen auf die zu stabilisierenden thermoplastischen Harze.

19. Polymerzusammensetzung nach einem der Ansprüche 14 bis 18, **dadurch gekennzeichnet, dass** sie einen Hydrotalcit oder ein Gemisch aus zwei oder mehr Hydrotalciten enthält.

20. Polymerzusammensetzung nach einem der Ansprüche 14 bis 19, **dadurch gekennzeichnet, dass** sie ein Gemisch aus Zinkstearat und mindestens einem weiteren organischen Zinksalz enthält.

21. Polymerzusammensetzung nach einem der Ansprüche 14 bis 20, **dadurch gekennzeichnet, dass** sie Calciumacetylacetonat oder Zinkacetylacetonat oder deren Gemisch in einer Menge von 0,001 bis weniger als 0,3 phr, bezogen auf das zu stabilisierende thermoplastische Harz oder die zu stabilisierenden thermoplastischen Harze, enthält.

22. Polymerzusammensetzung nach einem der Ansprüche 14 bis 21, **dadurch gekennzeichnet, dass** sie ein Triglycerid enthält.

23. Verfahren zur Herstellung einer Stabilisatorzusammensetzung zur Stabilisierung halogenhaltiger thermoplastischer Harze, bei dem
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch,
mit einander vermischt werden, wobei der Gewichtsanteil der Komponente (b) in einer Menge von 0,01 bis 30 Gew.-%, bezogen auf das Gesamtgewicht der Stabilsatorzusammensetzung, enthalten ist und wobei der Gewichtsanteil der Komponente (c) weniger als 0,3 phr, bezogen auf das zu stabilisierende thermoplastische Harz oder die zu stabilisierenden thermoplastischen Harze, beträgt.

24. Verfahren zur Herstellung einer Stabilisatorzusammensetzung zur Stabilisierung halogenhaltiger thermoplastischer Harze, bei dem
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch,
mit einander vermischt werden, wobei der Gewichtsanteil der Komponente (b) in einer Menge von 0,01 bis 30 Gew.-%, bezogen auf das Gesamtgewicht der Stabilsatorzusammensetzung, enthalten ist und wobei der Gewichtsanteil der Komponente (c) im Bereich von 0,01 bis 1,728 Gew.-%, bezogen auf das Gesamtgewicht der Stabilsatorzusammensetzung, liegt.

25. Verfahren zur Herstellung einer Polymerzusammensetzung, enthaltend eine Stabilisatorzusammensetzung und mindestens ein Polymeres, bei dem mindestens
(a) Calciumhydroxid oder Calciumoxid oder deren Gemisch,
(b) mindestens ein hydroxylgruppenhaltiges Isocyanurat,
(c) mindestens ein β-Diketon oder ein Salz eines β-Diketons oder deren Gemisch, und
(d) ein halogenhaltiges thermoplastisches Harz oder ein Gemisch aus zwei oder mehr halogenhaltigen thermoplastischen Harzen
vermischt werden, wobei der Gewichtsanteil der Komponente (b) in einer Menge von 0,01 bis 30 Gew.-%, bezogen auf das Gesamtgewicht der Stabilsatorzusammensetzung, enthalten ist und wobei der Gewichtsanteil der Komponente (c) weniger als 0,3 phr, bezogen auf das zu stabilisierende thermoplastische Harz oder die zu stabilisierenden thermoplastischen Harze, beträgt.

26. Verfahren zur Stabilisierung eines halogenhaltigen thermoplastischen Harzes oder eines Gemischs aus zwei oder mehr halogenhaltigen thermoplastischen Harzen, bei dem eine Stabilisatorzusammensetzung und mindestens ein halogenhaltiges thermoplastisches Polymeres vermischt werden, wobei die Stabilisatorzusammensetzung mindestens
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch
enthält und wobei der Gewichtsanteil der Komponente (b) in einer Menge von 0,01 bis 30 Gew.-%, bezogen auf das Gesamtgewicht der Stabilsatorzusammensetzung, enthalten ist und wobei der Gewichtsanteil der Komponente (c) weniger als 0,3 phr, bezogen auf das zu stabilisierende thermoplastische Harz oder die zu stabilisierenden thermoplastischen Harze, beträgt.

27. Verwendung einer Stabilisatorzusammensetzung zur Stabilisierung eines halogenhaltigen thermoplastischen Harzes oder eines Gemischs aus zwei oder mehr halogenhaltigen thermoplastischen Harzen, wobei die Stabilisatorzusammensetzung mindestens
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch
enthält, wobei der Gewichtsanteil der Komponente (b) in einer Menge von 0,01 bis 30 Gew.-%, bezogen auf das Gesamtgewicht der Stabilsatorzusammensetzung, enthalten ist und wobei der Gewichtsanteil der Komponente (c) weniger als 0,3 phr, bezogen auf das zu stabilisierende thermoplastische Harz oder die zu stabilisierenden thermoplastischen Harze, beträgt.

28. Verwendung einer Stabilisatorzusammensetzung zur Stabilisierung eines halogenhaltigen thermoplastischen Harzes oder eines Gemischs aus zwei oder mehr halogenhaltigen thermoplastischen Harzen, wobei die Stabilisatorzusammensetzung mindestens
(a) Calciumhydroxid oder Calciumoxid oder deren Gemisch,
(b) mindestens ein hydroxylgruppenhaltiges Isocyanurat und
(c) mindestens ein β-Diketon oder ein Salz eines β-Diketons oder deren Gemisch
enthält, wobei der Gewichtsanteil der Komponente (b) in einer Menge von 0,01 bis 30 Gew.-%, bezogen auf das Gesamtgewicht der Stabilsatorzusammensetzung, enthalten ist und wobei der Gewichtsanteil der Komponente (c) im Bereich von 0,01 bis 1,728 Gew.-%, bezogen auf das Gesamtgewicht der Stabilsatorzusammensetzung, liegt.

## Claims

1. Stabilizer composition for stabilizing halogen-containing thermoplastic resins, comprising
(a) calcium hydroxide or calcium oxide or their mixture,
(b) at least one hydroxyl-containing isocyanurate, and
(c) at least one β-diketone or salt of a β-diketone or their mixture,
wherein the weight fraction of component (b) is present in an amount of 0.01 to 30% by weight, based on the total weight of the stabilizer composition, and wherein the weight fraction of component (c) is less than 0.3 phr, based on the thermoplastic resin to be stabilized or on the thermoplastic resins to be stabilized.

2. Stabilizer composition according to claim 1, wherein component (a) is present in an amount of 0.01 to 2 phr, based on the thermoplastic resin to be stabilized or on the thermoplastic resins to be stabilized.

3. Stabilizer composition according to claim 1 or 2, wherein component (b) is present in an amount of 0.01 to 1 phr, based on the thermoplastic resin to be stabilized or on the thermoplastic resins to be stabilized.

4. Stabilizer composition according to any one of claims 1 to 3, **characterized in that** one or more of the following conditions are met:
(i) the content of component (a) is 0.05 to 0.3299 phr, based on the thermoplastic resin to be stabilized or on the thermoplastic resins to be stabilized,
(ii) the content of component (b) is 0.05 to 0.299 phr, based on the thermoplastic resin to be stabilized or on the thermoplastic resins to be stabilized,
(iii) the content of component (c) is 0.01 to less than 0.3 phr, based on the thermoplastic resin to be stabilized or on the thermoplastic resins to be stabilized.

5. Stabilizer composition according to any one of claims 1 to 4, **characterized in that** the stabilizer composition contains calcium acetylacetonate or zinc acetylacetonate or their mixture in an amount of 0.001 to less than 0.3 phr, based on the thermoplastic resins to be stabilized.

6. Stabilizer composition for stabilizing halogen-containing thermoplastic resins, comprising
(a) calcium hydroxide or calcium oxide or their mixture,
(b) at least one hydroxyl-containing isocyanurate, and
(c) at least one β-diketone or salt of a β-diketone or their mixture,
wherein the weight fraction of component (b) is present in an amount of 0.01 to 30% by weight, based on the total weight of the stabilizer composition, and wherein the weight fraction of component (c) is in the range from 0.01 to 1.728% by weight, based on the total weight of the stabilizer composition.

7. Stabilizer composition according to claim 6, wherein component (a) is present in an amount of 0.01 to 30% by weight, based on the total weight of the stabilizer composition.

8. Stabilizer composition according to any one of claims 6 to 7, **characterized in that** one or more of the following conditions are met:
(i) the content of component (a) is 0.15 to 5% by weight, based on the total weight of the stabilizer composition,
(ii) the content of component (b) is 0.1 to 5% by weight, based on the total weight of the stabilizer composition,
(iii) the content of component (c) is 0.05 to 1.728% by weight, based on the total weight of the stabilizer composition.

9. Stabilizer composition according to any one of claims 6 to 8, **characterized in that** the stabilizer composition contains calcium acetylacetonate or zinc acetylacetonate or their mixture in an amount of 0.01 to 1.728% by weight, based on the total weight of the stabilizer composition.

10. Stabilizer composition according to any one of claims 1 to 9, wherein the hydroxyl-containing isocyanurate is selected from compounds of the general formula (I) 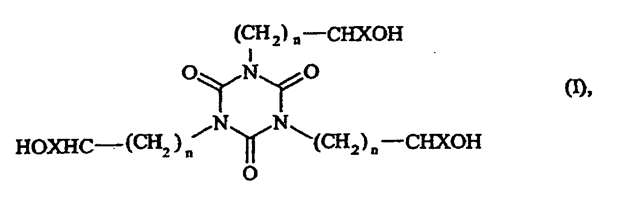 wherein the groups X and the indices n are identical or different and n is an integer from 0 to 5 and X is a hydrogen atom or a linear or branched alkyl group having 1 to 6 carbon atoms.

11. Stabilizer composition according to any one of claims 1 to 10, **characterized in that** the stabilizer composition contains a hydrotalcite or a mixture of two or more hydrotalcites.

12. Stabilizer composition according to any one of claims 1 to 11, **characterized in that** the stabilizer composition contains a mixture of zinc stearate and at least one further organic zinc carboxylate.

13. Stabilizer composition according to any one of claims 1 to 12, **characterized in that** the stabilizer composition contains a triglyceride.

14. Polymer composition containing a stabilizer composition and at least one polymer, the stabilizer composition comprising at least
(a) calcium hydroxide or calcium oxide or their mixture,
(b) at least one hydroxyl-containing isocyanurate,
(c) at least one β-diketone or salt of a β-diketone or their mixture,
and the polymer comprising
(d) a halogen-containing thermoplastic resin or a mixture of two or more halogen-containing thermoplastic resins,
and wherein the weight fraction of component (b) is present in an amount of 0.01 to 30% by weight, based on the total weight of the stabilizer composition, and wherein the weight fraction of component (c) is less than 0.3 phr, based on the thermoplastic resin to be stabilized or on the thermoplastic resins to be stabilized.

15. Polymer composition according to claim 14, **characterized in that** component (a) is present in an amount of 0.01 to 2 phr, based on the halogen-containing resin.

16. Polymer composition according to either claim 14 or claim 15, **characterized in that** component (b) is present in an amount of 0.01 to 1 part by weight, based on the halogen-containing resin.

17. Polymer composition according to any one of claims 14 to 16, **characterized in that** the hydroxyl-containing isocyanurate is selected from compounds of the general formula (I) 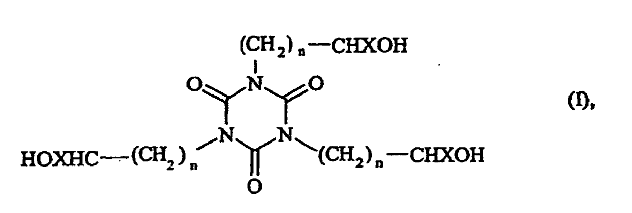 wherein the groups X and the indices n are identical or different and n is an integer from 0 to 5 and X is a hydrogen atom or a linear or branched alkyl group having 1 to 6 carbon atoms.

18. Polymer composition according to any one of claims 14 to 17, **characterized in that** one or more of the following conditions are met:
(i) the content of component (a) is 0.05 to 0.3299 phr, based on the thermoplastic resins to be stabilized,
(ii) the content of component (b) is 0.05 to 0.299 phr, based on the thermoplastic resins to be stabilized,
(iii) the content of component (c) is 0.01 to less than 0.3 phr, based on the thermoplastic resins to be stabilized.

19. Polymer composition according to any one of claims 14 to 18, **characterized in that** it contains a hydrotalcite or a mixture of two or more hydrotalcites.

20. Polymer composition according to any one of claims 14 to 19, **characterized in that** it contains a mixture of zinc stearate and at least one further organic zinc salt.

21. Polymer composition according to any one of claims 14 to 20, **characterized in that** it contains calcium acetylacetonate or zinc acetylacetonate or their mixture in an amount of 0.001 to less than 0.3 phr, based on the thermoplastic resin to be stabilized or on the thermoplastic resins to be stabilized.

22. Polymer composition according to any one of claims 14 to 21, **characterized in that** it contains a triglyceride.

23. Process for preparing a stabilizer composition for stabilizing halogen-containing thermoplastic resins, which comprises mixing
(a) calcium hydroxide or calcium oxide or their mixture,
(b) at least one hydroxyl-containing isocyanurate, and
(c) at least one β-diketone or salt of a β-diketone or their mixture,
with each other, wherein the weight fraction of component (b) is present in an amount of 0.01 to 30% by weight, based on the total weight of the stabilizer composition, and wherein the weight fraction of component (c) is less than 0.3 phr, based on the thermoplastic resin to be stabilized or on the thermoplastic resins to be stabilized.

24. Process for preparing a stabilizer composition for stabilizing halogen-containing thermoplastic resins, which comprises mixing
(a) calcium hydroxide or calcium oxide or their mixture,
(b) at least one hydroxyl-containing isocyanurate, and
(c) at least one β-diketone or one salt of a β-diketone or their mixture,
with each other, wherein the weight fraction of component (b) is present in an amount of 0.01 to 30% by weight, based on the total weight of the stabilizer composition, and wherein the weight fraction of component (c) is in the range from 0.01 to 1.728% by weight, based on the total weight of the stabilizer composition.

25. Process for preparing a polymer composition containing a stabilizer composition and at least one polymer, which comprises mixing at least
(a) calcium hydroxide or calcium oxide or their mixture,
(b) at least one hydroxyl-containing isocyanurate,
(c) at least one β-diketone or salt of a β-diketone or their mixture, and
(d) a halogen-containing thermoplastic resin or a mixture of two or more halogen-containing thermoplastic resins,
with each other, wherein the weight fraction of component (b) is present in an amount of 0.01 to 30% by weight, based on the total weight of the stabilizer composition, and wherein the weight fraction of component (c) is less than 0.3 phr, based on the thermoplastic resin to be stabilized or on the thermoplastic resins to be stabilized.

26. Process for stabilizing a halogen-containing thermoplastic resin or a mixture of two or more halogen-containing thermoplastic resins, which comprises mixing a stabilizer composition and at least one halogen-containing thermoplastic polymer, the stabilizer composition containing at least
(a) calcium hydroxide or calcium oxide or their mixture,
(b) at least one hydroxyl-containing isocyanurate, and
(c) at least one β-diketone or salt of a β-diketone or their mixture,
and wherein the weight fraction of component (b) is present in an amount of 0.01 to 30% by weight, based on the total weight of the stabilizer composition, and wherein the weight fraction of component (c) is less than 0.3 phr, based on the thermoplastic resin to be stabilized or on the thermoplastic resins to be stabilized.

27. Use of a stabilizer composition for stabilizing a halogen-containing thermoplastic resin or a mixture of two or more halogen-containing thermoplastic resins, the stabilizer composition containing at least
(a) calcium hydroxide or calcium oxide or their mixture,
(b) at least one hydroxyl-containing isocyanurate, and
(c) at least one β-diketone or salt of a β-diketone or their mixture,
wherein the weight fraction of component (b) is present in an amount of 0.01 to 30% by weight, based on the total weight of the stabilizer composition, and wherein the weight fraction of component (c) is less than 0.3 phr, based on the thermoplastic resin to be stabilized or on the thermoplastic resins to be stabilized.

28. Use of a stabilizer composition for stabilizing a halogen-containing thermoplastic resin or a mixture of two or more halogen-containing thermoplastic resins, the stabilizer composition containing at least
(a) calcium hydroxide or calcium oxide or their mixture,
(b) at least one hydroxyl-containing isocyanurate, and
(c) at least one β-diketone or salt of a β-diketone or their mixture,
wherein the weight fraction of component (b) is present in an amount of 0.01 to 30% by weight, based on the total weight of the stabilizer composition, and wherein the weight fraction of component (c) is in the range from 0.01 to 1.728% by weight, based on the total weight of the stabilizer composition.

## Revendications

1. Composition de stabilisateur pour la stabilisation de résines thermoplastiques contenant halogène, comprenant
(a) de l'hydroxyde de calcium ou de l'oxyde de calcium ou leur mélange,
(b) au moins un isocyanurate contenant des groupes hydroxyle et
(c) au moins une β-dicétone ou un sel d'une β-dicétone ou leur mélange,
la proportion en poids du composant (b) étant contenue en une quantité de 0,01 à 30% en poids, par rapport au poids total de la composition de stabilisateur et la proportion en poids du composant (c) étant inférieure à 0,3 partie par cent parties, par rapport à la résine thermoplastique à stabiliser ou aux résines thermoplastiques à stabiliser.

2. Composition de stabilisateur selon la revendication 1, dans laquelle le composant (a) est contenu en une quantité de 0,01 à 2 parties par cent parties, par rapport à la résine thermoplastique à stabiliser ou aux résines thermoplastiques à stabiliser.

3. Composition de stabilisateur selon la revendication 1 ou 2, dans laquelle le composant (b) est contenu en une quantité de 0,01 à 1 partie par cent parties, par rapport à la résine thermoplastique à stabiliser ou aux résines thermoplastiques à stabiliser.

4. Composition de stabilisateur selon l'une quelconque des revendications 1 à 3, **caractérisée en ce qu'**une ou plusieurs des conditions suivantes sont remplies :
(i) la teneur en composant (a) est de 0,05 à 0,3299 partie par cent parties, par rapport à la résine thermoplastique à stabiliser ou aux résines thermoplastiques à stabiliser,
(ii) la teneur en composant (b) est de 0,05 à 0,299 partie par cent parties, par rapport à la résine thermoplastique à stabiliser ou aux résines thermoplastiques à stabiliser,
(iii) la teneur en composant (c) est de 0,01 à moins de 0,3 partie par cent parties, par rapport à la résine thermoplastique à stabiliser ou aux résines thermoplastiques à stabiliser.

5. Composition de stabilisateur selon l'une quelconque des revendications 1 à 4, **caractérisée en ce que** la composition de stabilisateur contient de l'acétylacétonate de calcium ou de l'acétylacétonate de zinc ou leur mélange en une quantité de 0,001 à moins de 0,3 partie par cent parties par rapport aux résines thermoplastiques à stabiliser.

6. Composition de stabilisateur pour la stabilisation de résines thermoplastiques contenant halogène, comprenant
(a) de l'hydroxyde de calcium ou de l'oxyde de calcium ou leur mélange,
(b) au moins un isocyanurate contenant des groupes hydroxyle et
(c) au moins une β-dicétone ou un sel d'une β-dicétone ou leur mélange, la proportion en poids du composant (b) étant contenue en une quantité de 0,01 à 30% en poids, par rapport au poids total de la composition de stabilisateur et la proportion en poids du composant (c) étant située dans la plage de 0,01 à 1,728% en poids, par rapport au poids total de la composition de stabilisateur.

7. Composition selon la revendication 6, où le composant (a) est contenu en une quantité de 0,01 à 30% en poids, par rapport au poids total de la composition de stabilisateur.

8. Composition de stabilisateur selon l'une quelconque des revendications 6 à 7, **caractérisée en ce qu'**une ou plusieurs des conditions suivantes sont remplies :
(i) la teneur en composant (a) est de 0,15 à 5% en poids, par rapport au poids total de la composition de stabilisateur,
(ii) la teneur en composant (b) est de 0,1 à 5% en poids, par rapport au poids total de la composition de stabilisateur,
(iii) la teneur en composant (c) est de 0,05 à 1,728% en poids, par rapport au poids total de la composition de stabilisateur.

9. Composition de stabilisateur selon l'une quelconque des revendications 6 à 8, **caractérisée en ce que** la composition de stabilisateur contient de l'acétylacétonate de calcium ou de l'acétylacétonate de zinc ou leur mélange en une quantité de 0,01 à 1,728% en poids par rapport au poids total de la composition de stabilisateur.

10. Composition de stabilisateur selon l'une quelconque des revendications 1 à 9, dans laquelle l'isocyanurate contenant des groupes hydroxyle est choisi parmi les composés de formule générale (I) 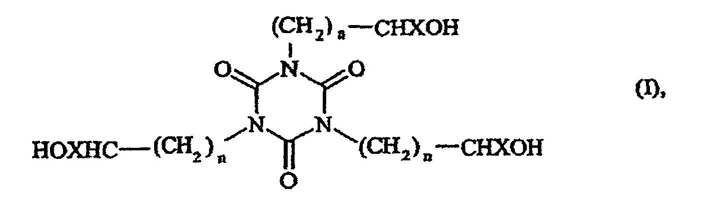 dans laquelle les groupes X et les indices n sont à chaque fois identiques ou différents et n représente un nombre entier de 0 à 5 et X représente un atome d'hydrogène ou un groupe alkyle linéaire ou ramifié comprenant 1 à 6 atomes de carbone.

11. Composition de stabilisateur selon l'une quelconque des revendications 1 à 10, **caractérisée en ce que** la composition de stabilisateur contient une hydrotalcite ou un mélange de deux hydrotalcites ou plus.

12. Composition de stabilisateur selon l'une quelconque des revendications 1 à 11, **caractérisée en ce que** la composition de stabilisateur contient un mélange de stéarate de zinc et d'au moins un autre carboxylate de zinc organique.

13. Composition de stabilisateur selon l'une quelconque des revendications 1 à 12, **caractérisée en ce que** la composition de stabilisateur contient un triglycéride.

14. Composition de polymère, contenant une composition de stabilisateur et au moins un polymère, contenant, comme composition de stabilisateur, au moins
(a) de l'hydroxyde de calcium ou de l'oxyde de calcium ou leur mélange,
(b) au moins un isocyanurate contenant des groupes hydroxyle,
(c) au moins une β-dicétone ou un sel d'une β-dicétone ou leur mélange, et comme polymère,
(d) une résine thermoplastique contenant halogène ou un mélange de deux résines thermoplastiques contenant halogène ou plus,
et la proportion en poids du composant (b) étant contenue en une quantité de 0,01 à 30% en poids, par rapport au poids total de la composition de stabilisateur et la proportion en poids du composant (c) étant inférieure à 0,3 partie par cent parties, par rapport à la résine thermoplastique à stabiliser ou aux résines thermoplastiques à stabiliser.

15. Composition de polymère selon la revendication 14, **caractérisée en ce que** le composant (a) est contenu en une quantité de 0,01 à 2 parties par cent parties par rapport à la résine contenant halogène.

16. Composition de polymère selon l'une quelconque des revendications 14 ou 15, **caractérisée en ce que** le composant (b) est contenu en une quantité de 0,01 à 1 partie en poids par rapport à la résine contenant halogène.

17. Composition de polymère selon l'une quelconque des revendications 14 à 16, **caractérisée en ce que** l'isocyanurate contenant des groupes hydroxyle est choisi parmi les composés de formule générale (I) 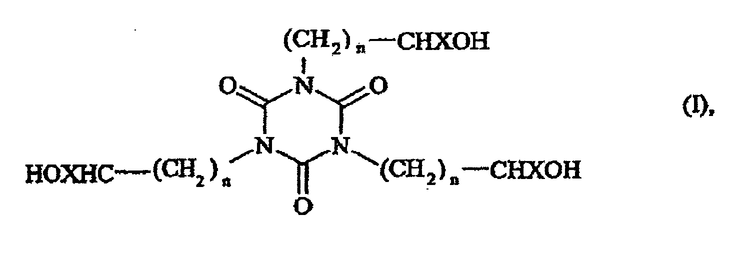 dans laquelle les groupes X et les indices n sont à chaque fois identiques ou différents et n représente un nombre entier de 0 à 5 et X représente un atome d'hydrogène ou un groupe alkyle linéaire ou ramifié comprenant 1 à 6 atomes de carbone.

18. Composition de polymère selon l'une quelconque des revendications 14 à 17, **caractérisée en ce qu'**une ou plusieurs des conditions suivantes sont remplies :
(i) la teneur en composant (a) est de 0,05 à 0,3299 partie par cent parties, par rapport à la résine thermoplastique à stabiliser,
(ii) la teneur en composant (b) est de 0,05 à 0,299 partie par cent parties, par rapport à la résine thermoplastique à stabiliser,
(iii) la teneur en composant (c) est de 0,01 à moins de 0,3 partie par cent parties, par rapport à la résine thermoplastique à stabiliser.

19. Composition de polymère selon l'une quelconque des revendications 14 à 18, **caractérisée en ce qu'**elle contient une hydrotalcite ou un mélange de deux hydrotalcites ou plus.

20. Composition de polymère selon l'une quelconque des revendications 14 à 19, **caractérisée en ce qu'**elle contient un mélange de stéarate de zinc et d'au moins un autre sel de zinc organique.

21. Composition de polymère selon l'une quelconque des revendications 14 à 20, **caractérisée en ce qu'**elle contient de l'acétylacétonate de calcium ou de l'acétylacétonate de zinc ou leur mélange en une quantité de 0,001 à moins de 0,3 partie par cent parties par rapport à la résine thermoplastique à stabiliser ou aux résines thermoplastiques à stabiliser.

22. Composition de polymère selon l'une quelconque des revendications 14 à 21, **caractérisée en ce qu'**elle contient un triglycéride.

23. Procédé pour la préparation d'une composition de stabilisateur pour la stabilisation de résines thermoplastiques contenant halogène, dans lequel on mélange l'un avec l'autre
(a) de l'hydroxyde de calcium ou de l'oxyde de calcium ou leur mélange,
(b) au moins un isocyanurate contenant des groupes hydroxyle et
(c) au moins une β-dicétone ou un sel d'une β-dicétone ou leur mélange,
la proportion en poids du composant (b) étant contenue en une quantité de 0,01 à 30% en poids, par rapport au poids total de la composition de stabilisateur et la proportion en poids du composant (c) étant inférieure à 0,3 partie par cent parties, par rapport à la résine thermoplastique à stabiliser ou aux résines thermoplastiques à stabiliser.

24. Procédé pour la préparation d'une composition de stabilisateur pour la stabilisation de résines thermoplastiques contenant halogène, dans lequel on mélange l'un avec l'autre
(a) de l'hydroxyde de calcium ou de l'oxyde de calcium ou leur mélange,
(b) au moins un isocyanurate contenant des groupes hydroxyle et
(c) au moins une β-dicétone ou un sel d'une β-dicétone ou leur mélange,
la proportion en poids du composant (b) étant contenue en une quantité de 0,01 à 30% en poids, par rapport au poids total de la composition de stabilisateur et la proportion en poids du composant (c) étant située dans la plage de 0,01 à 1,728% en poids, par rapport au poids total de la composition de stabilisateur.

25. Procédé pour la préparation d'une composition de polymère, contenant une composition de stabilisateur et au moins un polymère, dans lequel on mélange au moins
(a) de l'hydroxyde de calcium ou de l'oxyde de calcium ou leur mélange,
(b) au moins un isocyanurate contenant des groupes hydroxyle,
(c) au moins une β-dicétone ou un sel d'une β-dicétone ou leur mélange, et
(d) une résine thermoplastique contenant halogène ou un mélange de deux résines thermoplastiques contenant halogène ou plus
la proportion en poids du composant (b) étant contenue en une quantité de 0,01 à 30% en poids, par rapport au poids total de la composition de stabilisateur et la proportion en poids du composant (c) étant inférieure à 0,3 partie par cent parties, par rapport à la résine thermoplastique à stabiliser ou aux résines thermoplastiques à stabiliser.

26. Procédé pour la stabilisation d'une résine thermoplastique contenant halogène ou un mélange de deux résines thermoplastiques contenant halogène ou plus, dans lequel on mélange une composition de stabilisateur et au moins un polymère thermoplastique contenant halogène, la composition de stabilisateur contenant au moins
(a) de l'hydroxyde de calcium ou de l'oxyde de calcium ou leur mélange,
(b) au moins un isocyanurate contenant des groupes hydroxyle et
(c) au moins une β-dicétone ou un sel d'une β-dicétone ou leur mélange,
et la proportion en poids du composant (b) étant contenue en une quantité de 0,01 à 30% en poids, par rapport au poids total de la composition de stabilisateur et la proportion en poids du composant (c) étant inférieure à 0,3 partie par cent parties, par rapport à la résine thermoplastique à stabiliser ou aux résines thermoplastiques à stabiliser.

27. Utilisation d'une composition de stabilisateur pour la stabilisation d'une résine thermoplastique contenant halogène ou d'un mélange de deux résines thermoplastiques contenant halogène ou plus, où la composition de stabilisateur contient au moins
(a) de l'hydroxyde de calcium ou de l'oxyde de calcium ou leur mélange,
(b) au moins un isocyanurate contenant des groupes hydroxyle et
(c) au moins une β-dicétone ou un sel d'une β-dicétone ou leur mélange,
la proportion en poids du composant (b) étant contenue en une quantité de 0,01 à 30% en poids, par rapport au poids total de la composition de stabilisateur et la proportion en poids du composant (c) étant inférieure à 0,3 partie par cent parties, par rapport à la résine thermoplastique à stabiliser ou aux résines thermoplastiques à stabiliser.

28. Utilisation d'une composition de stabilisateur pour la stabilisation d'une résine thermoplastique contenant halogène ou d'un mélange de deux résines thermoplastiques contenant halogène ou plus, où la composition de stabilisateur contient au moins
(a) de l'hydroxyde de calcium ou de l'oxyde de calcium ou leur mélange,
(b) au moins un isocyanurate contenant des groupes hydroxyle et
(c) au moins une β-dicétone ou un sel d'une β-dicétone ou leur mélange,
la proportion en poids du composant (b) étant contenue en une quantité de 0,01 à 30% en poids, par rapport au poids total de la composition de stabilisateur et la proportion en poids du composant (c) étant située dans la plage de 0,01 à 1,728% en poids, par rapport au poids total de la composition de stabilisateur.
